# FASCICULE DE BREVET EUROPEEN

(11) **EP 3 268 328 B1**
(45) Date de publication et mention de la délivrance du brevet: **24.07.2019**
(21) Numéro de dépôt: 16711162.4
(22) Date de dépôt: 07.03.2016
(51) Int. Cl.: C04B 35/01, C03B 5/42, C04B 35/101, C04B 35/12, C04B 35/14, C04B 35/482, F27D 1/16, C04B 35/632, C04B 35/634, C04B 35/66, C04B 35/76

(54) **PRODUIT NON FAÇONNÉ POUR RÉPARATION DE FOURS DE FUSION DE VERRE**
UNGEFORMTES PRODUKT FÜR DIE GLASOFENREPARATUR
UNSHAPED PRODUCT FOR THE REPAIR OF GLASS FURNACES

(30) Priorité: 09.03.2015 FR 1551936; 09.03.2015 FR 1551940
(43) Date de publication de la demande: 17.01.2018
(73) Titulaire: Saint-Gobain Centre de Recherches et d'Etudes Européen, 92400 Courbevoie (FR)
(72) Inventeur: CABODI, Isabelle, 84300 Cavaillon (FR); CONSALES, Thierry, 84210 Pernes Les Fontaines (FR); GAUBIL, Michel, 30133 Les Angles (FR)
(74) Mandataire: Nony
(86) Numéro de dépôt international: PCT/EP2016/054827
(87) Numéro de publication internationale: WO 2016/142353

(56) Documents cités:
- EP-A1- 1 443 029
- EP-B1- 0 739 861
- WO-A1-2011/077411
- US-A1- 2012 309 608

## Description

### Domaine technique

La présente invention est relative à un produit non façonné, destiné notamment à la réparation d'une sole d'un four de fusion de verre. L'invention concerne également un procédé de réparation de four de fusion de verre comportant une étape de mise en oeuvre dudit produit non façonné, ainsi qu'un four de fusion de verre comportant au moins une partie obtenue à partir dudit produit non façonné.

### Etat de la technique

L'industrie du verre utilise généralement pour la construction de ses fours des produits réfractaires fondus et coulés, ou obtenus par frittage, très résistants à la corrosion par le verre, et se présentant sous la forme de blocs ou de dalles.

Le verre en fusion est très corrosif et les produits réfractaires, en particulier ceux constituant la cuve de fusion, notamment la sole de ladite cuve, subissent une usure importante, pouvant conduire la création de fuites de verre en fusion. Ces fuites sont dangereuses et peuvent entraîner un arrêt du four.

Afin d'augmenter la durée de vie du four, le verrier peut être amené à réaliser des réparations. EP 0 739 861 B1 décrit un produit pour réparer des fours de fusion de verre. Ce produit présente une mauvaise coulabilité à chaud. Pour toute réparation, le four doit être refroidi, ce qui augmente sensiblement la durée nécessaire à la réparation.

Par ailleurs, ce produit nécessite un frittage de consolidation à une température élevée, pendant une longue durée. Pour cette raison également, ce produit ne permet pas une réparation rapide.

EP 2 358 650 décrit un béton (c'est-à-dire comportant du ciment) auto-coulable qui peut être utilisé pour la fabrication d'une sole de four de verrerie. Les particules de taille inférieure à 40 µm peuvent être distribuées, en pourcentages en masse par rapport à la masse du béton non façonné, de la manière suivante :

| | |
|---|---|
| - fraction < 0,5 µm : | ≥ 4%, |
| - fraction < 2 µm : | ≥ 5 %, |
| - fraction < 10 µm : | ≥ 19%, |
| - fraction < 40 µm : | 34% - 52%, |
| - fraction comprise entre 2 µm et 40 µm : | 26,5% - 34% |

Comme le produit de EP 0 739 861, ce béton non façonné n'est cependant pas adapté à une application à chaud.

Par ailleurs, des produits non façonnés sont utilisés lors de réparation de fours d'élaboration des métaux. Les contraintes mécaniques dans cette application sont cependant très différentes de celles rencontrées dans l'application aux fours de verrerie. Les conditions de corrosion des fours par un verre ou par un métal en fusion sont également différentes. Enfin, certaines impuretés, tolérées dans les fours d'élaboration des métaux, sont inacceptables pour la fabrication de verre. En particulier, les matériaux réfractaires utilisés dans les fours de verrerie ne doivent pas générer de lâcher de pierres par morcellement ni produire de bulles. Un produit non façonné destiné à un four d'élaboration des métaux n'est donc pas, *a priori,* utilisable pour un four de verrerie, en particulier dans une zone en contact avec le verre.

Il existe un besoin pour un produit non façonné apte à constituer, après ajout d'eau, un mélange humide adapté pour une réparation rapide d'une région d'un four de fusion de verre. La présente invention vise à satisfaire, au moins partiellement, ce besoin.

### Résumé de l'invention

L'invention propose un produit non façonné selon la revendication 1.

Comme on le verra plus en détail dans la suite de la description, un mélange humide, obtenu après ajout d'eau dans le produit non façonné selon l'invention
- est pompable avec des pressions d'aspiration inférieures ou égales à 180 bar,
- est « auto-coulable » à chaud,
- ne conduit pas à une ségrégation préjudiciable, et ainsi, après frittage à basse température, conduit à un produit façonné qui présente une bonne résistance à l'écrasement.

Un produit non façonné selon l'invention est donc parfaitement apte à être utilisé pour la réparation d'un four de fusion de verre, en particulier pour une réparation d'une sole d'un tel four.

Dans un premier mode de réalisation principal, l'ensemble des particules (b) comporte, voire est constitué de particules de verre.

Dans un deuxième mode de réalisation principal, l'ensemble des particules (b) comporte, voire est constitué de particules de vitrocéramique et/ou de particules de verre précurseur de vitrocéramique.

De préférence, la quantité massique de particules de vitrocéramique et/ou de particules de verre précurseur de vitrocéramique dans l'ensemble des particules (b) est supérieure à 10%, de préférence supérieure à 20%, de préférence supérieure à 30%, de préférence supérieure à 50%, de préférence supérieure à 70%, voire supérieure à 90%, voire supérieure à 95%, voire sensiblement égale à 100%, sur la base de la masse de l'ensemble des particules (b). Avantageusement, la résistance à la corrosion et les propriétés thermomécaniques du produit façonné en sont améliorées.

De préférence, l'ensemble des particules (b) est constitué de particules de verre et comporte des particules de verre précurseur de vitrocéramique. De préférence encore, l'ensemble des particules (b) est constitué de particules de verre précurseur de vitrocéramique.

Un produit non façonné selon l'invention peut encore comporter une ou plusieurs des caractéristiques optionnelles suivantes :
- Les particules (a) et (b), de préférence l'ensemble des particules du produit non façonné, se répartissent de la manière suivante, en pourcentages massiques :

| | |
|---|---|
| - fraction < 0,5 µm : | ≤ 7%, de préférence ≤ 6%, de préférence ≤ 5%, et/ou voire ≥ 2%, et/ou |
| - fraction < 2 µm : | ≥ 5%, de préférence ≥ 6%, de préférence ≥ 7% et/ou de préférence ≤ 18%, de préférence ≤ 16%, de préférence ≤ 14%, de préférence ≤ 12%, et/ou |
| - fraction < 10 µm : | ≥ 16%, de préférence ≥ 19%, de préférence ≥ 20% et/ou, de préférence ≤ 40%, de préférence ≤ 35%, de préférence ≤ 33%, de préférence ≤ 30%, de préférence ≤ 28%, et/ou |
| - fraction < 40 µm : | ≥ 27%, de préférence ≥ 29%, de préférence ≥ 30%, de préférence ≥ 33%, de préférence ≥ 35%, de préférence ≥ 37% et/ou de préférence ≤ 50%, de préférence ≤ 47%, de préférence ≤ 45%, de préférence ≤ 42%, et/ou |
| - fraction comprise entre 2 µm et 40 µm : | ≥ 16% et/ou ≤ 40%. |

- La taille maximale de l'ensemble des particules (a) et (b), de préférence la taille maximale de l'ensemble des particules du produit non façonné, est inférieure ou égale à 2,5 mm, de préférence inférieure ou égale à 2 mm, voire inférieure ou égale à 1,5 mm.
- L'ensemble des particules (a) et (b) de taille inférieure à 500 µm, de préférence l'ensemble des particules du produit non façonné de taille inférieure à 500 µm, représente plus de 50%, de préférence plus de 55%, de préférence plus de 60%, de préférence plus de 65%, voire plus de 70% de la masse dudit produit non façonné.
- L'ensemble des particules (a) et (b) de taille supérieure à 1 mm, de préférence l'ensemble des particules du produit non façonné de taille supérieure à 1 mm, représente entre 0 et 22%, de préférence entre 0 et 17%, de préférence entre 0 et 14%, voire entre 7% et 14% de la masse dudit produit non façonné.
- L'ensemble des particules (a) et (b) de taille supérieure à 1,25 mm, de préférence l'ensemble des particules du produit non façonné de taille supérieure à 1,25 mm, représente entre 0 et 19%, de préférence entre 0 et 15%, voire entre 0 et 12%, voire entre 0 et 10%, voire entre 5% et 10% de la masse dudit produit non façonné.
- La quantité de particules (a) dans le produit non façonné est supérieure à 82%, de préférence supérieure à 85%, de préférence supérieure à 91% et/ou inférieure à 98%, de préférence inférieure à 97%.
- De préférence, l'ensemble des particules (a) comporte, en pourcentages massiques sur la base de la masse du produit non façonné :
- une teneur en particules AZS supérieure à 10%, supérieure à 20% et/ou inférieure à 95% ; et/ou
- une teneur en alumine réactive supérieure à 2%, supérieure à 3%, supérieure à 4%, et/ou inférieure à 13%, inférieure à 10%, inférieure à 8% ; et/ou
- une teneur en alumine calcinée supérieure à 5%, supérieure à 10%, et/ou inférieure à 38%, inférieure à 35% ; et/ou
- une teneur en alumine électrofondue supérieure à 10%, supérieure à 20%, supérieure à 25%, et/ou inférieure à 70%, inférieure à 65% ; et/ou
- des particules présentant l'analyse chimique suivante, en pourcentage en masse sur la base des oxydes : Cr₂O₃ + Al₂O₃ + ZrO₂ + MgO + Fe₂O₃ + SiO₂ + TiO₂ ≥ 90%, de préférence ≥ 95%, et Cr₂O₃ + Al₂O₃ ≥ 40%, voire ≥ 50%, voire ≥ 60%, voire ≥ 70%, voire ≥ 80%, voire ≥ 90%, voire même ≥ 95%, et Cr₂O₃ ≥ 9%, voire ≥ 15%, voire ≥ 20%, voire ≥ 29%, voire ≥ 39%, voire ≥ 49%, voire ≥ 59%, voire ≥ 70%, voire ≥ 80%, voire ≥ 90%, et 20% ≥ SiO₂ ≥ 0,5%, et autres oxydes : ≤ 10%, de préférence ≤ 5%, la teneur en lesdites particules étant supérieure à 10%, supérieure à 20%, supérieure à 30% et/ou inférieure à 95%, et/ou
- une teneur en oxyde de chrome pigmentaire supérieure à 5%, supérieure à 10%, et/ou inférieure à 25%, inférieure à 20%.

- Le liant à chaud est choisi de manière à ne pas être à l'état solide à une température de 1350°C, de préférence de 1300°C, de préférence de 1250°C, de préférence de 1200°C, de préférence de 1150°C,
- Les particules (b) représentent plus de 3% et moins de 13%, de préférence moins de 12%, de préférence moins de 10%, de préférence moins de 9%, de préférence moins de 8% de la masse dudit produit non façonné.
- Les particules (b) du produit se répartissent de préférence de la manière suivante, en pourcentages massiques sur la base de la masse des particules (b) :
- fraction ≤ 1 mm : ≥ 80%, de préférence ≥ 90%, voire ≥ 95%, voire sensiblement 100%, et/ou
- fraction ≤ 0,5 mm : ≥ 80%, de préférence ≥ 90%, et/ou
- fraction ≤ 0,1 mm : ≥ 25% et/ou ≤ 48%, de préférence ≤ 45%, et/ou
- fraction ≤ 0,04 mm : ≤ 30%, de préférence ≤ 25%, voire ≤ 20%.

- Les particules (b) présentent de préférence une température de fusion supérieure à 750°C, de préférence supérieure à 800°C, de préférence supérieure à 900°C, et/ou inférieure à 1650°C, de préférence inférieure à 1600°C, de préférence inférieure à 1550°C, voire inférieure à 1500°C.
- De préférence, les particules (b) sont constituées en un matériau dont la composition chimique comporte plus de 90%, de préférence plus de 94%, de préférence plus de 97% d'oxydes. Dans un mode de réalisation, ledit matériau est sensiblement entièrement constitué d'oxydes.
- Les particules (b) sont constituées en un matériau dont la composition chimique comporte plus de 45%, de préférence plus de 50%, de préférence plus de 55% et/ou moins de 80%, de préférence moins de 75% de silice, en pourcentage massique.
- Les particules (b) en un verre précurseur de vitrocéramique et/ou les particules (b) en vitrocéramique présentent la composition chimique suivante, en pourcentages massiques sur la base des oxydes et pour un total de plus de 95%, plus de 98%, de préférence de sensiblement 100% :
- SiO₂ : 45% - 75%, et
- Al₂O₃ : 5% - 40%, et
- CaO + MgO + Li₂O : 3% - 30%,
- agents de nucléation, exprimés sous une forme oxyde : 0,1% - 20%.

- La quantité des agents de nucléation est de préférence supérieure à 1% et/ou inférieure à 10%, de préférence inférieure à 5%.
- De préférence, lesdits agents de nucléation sont choisis parmi TiO₂, ZrO₂, P₂O₅ et leurs mélanges.
- La quantité de particules (c) de ciment hydraulique est de préférence inférieure à 1%, de préférence inférieure à 0,5%. De préférence, la quantité de particules (c) de ciment hydraulique est sensiblement nulle.
- La teneur en « autres constituants » (d) est de préférence inférieure à 5%, de préférence inférieure à 3%, de préférence inférieure à 2%, de préférence inférieure à 1%.
- De préférence les « autres constituants » (d) sont constitués d'oxydes.
- De préférence les « autres constituants » (d) sont constitués d'agents tensio-actifs, d'adjuvants anti-ségrégation et, optionnellement de fibres.
- Le produit non façonné comporte un agent tensio-actif, de préférence entre 0,075% à 1% d'un agent tensio-actif.
- L'agent tensio-actif est un éther polycarboxylate modifié.
- Le produit non façonné comporte de préférence un adjuvant anti-ségrégation, de préférence en une quantité comprise entre 0,05% et 0,5% de la masse du produit non façonné.
- Dans un mode de réalisation, le produit non façonné comporte des fibres, de préférence organiques, de préférence entre 0,01% et 0,06%, de préférence entre 0,01% et 0,03%.
- Dans un mode de réalisation, le produit non façonné ne comporte pas de fibres. L'invention concerne également un mélange humide constitué par un produit non façonné selon l'invention et de l'eau en une quantité inférieure à 13%, inférieure à 12%, en pourcentage en masse sur la base du mélange humide.

En dépit d'une quantité d'eau limitée, un mélange humide selon l'invention est auto-coulable et ne conduit pas à une ségrégation. Après frittage, il conduit à un produit parfaitement adapté pour la réparation d'une région d'un four de verrerie destiné à être contact avec du verre en fusion.

L'invention concerne également un four de fusion de verre selon la revendication 19.

L'invention concerne encore un procédé de réparation d'un four de fusion selon la revendication 16.

### Définitions

- On appelle « produit non-façonné » un mélange particulaire sec ou humide apte à prendre en masse de manière à constituer un produit façonné.
- Par « mélange humide », on entend un mélange d'un produit non façonné et d'un liquide, de préférence de l'eau.
- Par particule « en un matériau » ou « d'un matériau », on entend une particule constituée pour plus de 95%, plus de 98%, de préférence sensiblement 100% de sa masse dudit matériau.
- Un ciment hydraulique, ou « liant hydraulique », est un liant qui, lors de l'activation, génère une prise et un durcissement hydraulique.
- Par « matériau réfractaire », on entend un matériau présentant une température de fusion supérieure à 1500°C. Cette définition est communément employée par l'homme du métier et citée dans « Matériaux réfractaires et céramiques techniques (éléments de céramurgie et de technologie) », G. Aliprandi, éditions Septima Paris, 1979. Cet ouvrage donne également en pages 297 à 301 des exemples de matériaux réfractaires, notamment oxydes, carbures et nitrures.
- Le « verre » des particules (b) est un matériau non cristallin présentant une température de transition vitreuse inférieure à 1100°C.
- Par « température de transition vitreuse » d'un verre, on entend la température à laquelle le matériau passe de l'état solide à l'état visqueux. La température de transition vitreuse peut être déterminée par analyse thermique différentielle (ATD). La température de transition vitreuse est la température à laquelle le verre présente une viscosité sensiblement égale à 10¹² Pa.s. Un verre est classiquement considéré « à l'état solide » à une température inférieure à sa température de transition vitreuse. De même, comme cela est bien connu, une vitrocéramique est considérée « à l'état solide » à une température inférieure à la température de transition vitreuse de sa phase vitreuse résiduelle.
- Par « liant à chaud », on entend un constituant présentant une température de fusion supérieure à 600°C, et apte à lier ensemble, après durcissement sous l'effet d'une baisse de la température, des particules (a) auxquelles il a été mélangé.
- Par « vitrocéramique » ou « matériau vitrocéramique », on entend classiquement un composé microcristallin obtenu par cristallisation contrôlée d'un « verre précurseur de vitrocéramique ».
   La cristallisation contrôlée d'un verre précurseur de vitrocéramique s'effectue classiquement lors d'une étape suivant, immédiatement ou non, l'étape d'obtention dudit verre précurseur de vitrocéramique.
   Un verre précurseur de vitrocéramique est un verre à l'état solide qui, à la différence des autres verres, contient des « agents de nucléation ».
   Un agent de nucléation est un agent capable de provoquer la formation de microcristallisations ou « microcristallites » lors du traitement thermique de cristallisation contrôlée, appelé habituellement "traitement thermique de cristallisation" ou "traitement thermique de vitrocéramisation", un microcristallite étant un cristal dont à la demi somme de la longueur et de la largeur est inférieure à 10µm. Les longueur et largeur d'un microcristallite sont classiquement évaluées à partir de vues en coupe de la vitrocéramique. La microstructure d'une vitrocéramique est ainsi constituée de microcristallites baignant dans une phase vitreuse résiduelle.
   La température de fusion d'un matériau vitrocéramique est la température d'équilibre séparant le domaine où coexistent des phases liquides et solides du domaine où seule une phase liquide est présente.
   Les produits fabriqués par fusion-refroidissement qui, au cours de leur fabrication, ne transitent pas par une étape dans laquelle ils sont à l'état de verre ne sont donc pas des matériaux vitrocéramiques. Le corindon fondu, l'alumine fondue, les spinelles fondus, la magnésie fondue, la mullite fondue, la mullite-zircone fondue, le titanate d'aluminium fondu, éventuellement dopé, et les nitrures fondus ne sont pas, en particulier, des matériaux vitrocéramiques.
   Par « taux de cristallisation » d'un matériau vitrocéramique, on entend le pourcentage massique de phases cristallisées contenues dans ledit matériau.
   Le taux de cristallisation peut être mesuré par diffraction des rayons X, par exemple suivant la méthode suivante :
   Les diagrammes de diffraction X sont acquis avec un diffractomètre D5000, avec anticathode en cuivre, de la société Bruker. L'acquisition est réalisée sur un domaine angulaire 2θ compris entre 5° et 80°, avec un pas de 0,02° et un temps de 1s/pas. Une fente de réception de 0,6 mm est utilisée et l'échantillon est en rotation sur lui-même afin de limiter les effets d'orientations préférentielles. Le temps d'acquisition est multiplié par 2 afin d'obtenir une meilleure statistique de comptage.
   La nature des phases cristallisées présentes est déterminée avec le logiciel EVA et la base de données des fiches ICDD.
   Le pourcentage de phases amorphes est mesuré avec le logiciel High Score Plus fourni par la société PANalytycal. La méthode utilise l'affinement Rietveld en ajoutant dans l'échantillon un pourcentage connu d'un étalon cristallisé standard, en l'occurrence l'oxyde de zinc ZnO. L'échantillon est une pastille obtenue par mélange, dans un mortier en agate, de 0,4 g (soit 20% en masse) de particules ZnO de pureté supérieure à 99% en masse et de taille inférieure à 1 µm et de 1,6 g (soit 80% en masse) de particules vitrocéramiques broyées pour présenter une taille inférieure à 40 µm.
   Les phases amorphes ne sont pas visibles avec la méthode Rietveld, seules les phases cristallisées sont prises en compte et leur somme est normalisée à 100%.
   Dans le cas où au moins une phase amorphe est aussi présente, la quantité de phases cristallisées doit être corrigée : L'ajout d'une quantité connue de l'étalon cristallisé permet d'effectuer une correction de la quantité de toutes les phases cristallisées présentes, et permet ainsi la détermination du pourcentage de phases amorphes présentes, %CompAm.
   Le taux de cristallisation est donné par la formule suivante : 100 - %CompAm, en pourcentage en masse.
- Les alumines calcinées, réactives et tabulaires sont parfaitement connues de l'homme du métier et disponibles dans le commerce.
   L'alumine calcinée est obtenue à partir de bauxite traitée selon le procédé Bayer suivi d'une calcination à une température typiquement entre 1000 et 1250°C afin d'éliminer les hydrates et obtenir une poudre principalement cristallisée sous forme Al₂O₃ alpha. L'alumine tabulaire est une alumine calcinée frittée sous air à une température supérieure à 1600°C et suffisamment longtemps pour que son retrait n'augmente plus. La morphologie des cristaux de cette alumine en tablettes hexagonales allongées est à l'origine de sa dénomination.
   L'alumine réactive est classiquement obtenue par broyage d'alumine calcinée. Les poudres de particules d'alumine réactive présentent classiquement un diamètre médian inférieur à 2 microns, de préférence inférieur à 1 micron.

- Les percentiles ou « centiles » 10 (D₁₀), 50 (D₅₀), et 90 (D₉₀) sont les tailles de particules d'une poudre correspondant aux pourcentages en masse, de 10%, de 50% et de 90% respectivement, sur la courbe de distribution granulométrique cumulée des tailles des particules de la poudre, les tailles des particules étant classées par ordre croissant. Par exemple, 90%, en masse des particules de la poudre ont une taille inférieure à D₉₀ et 10% des particules en masse ont une taille supérieure ou égale à D₁₀. Les percentiles peuvent être déterminés à l'aide d'une distribution granulométrique réalisée à l'aide d'un granulomètre laser. Le granulomètre laser utilisé peut être un Partica LA-950 de la société HORIBA.
   D₅₀ correspond à la « taille médiane » d'un ensemble de particules, c'est-à-dire à la taille divisant les particules de cet ensemble en première et deuxième populations égales en masse, ces première et deuxième populations ne comportant que des particules présentant une taille supérieure ou égale, ou inférieure respectivement, à la taille médiane.
   On appelle « taille maximale » le percentile 99,5 (D_{99,5}) d'un ensemble de particules.
   Il est clair que les particules ayant une taille inférieure à 10 µm (qui constituent la « fraction < 10 µm ») sont comptabilisées dans les 29% à 52% des particules ayant une taille inférieure à 40 µm, que les particules ayant une taille inférieure à 2 µm sont comptabilisées dans les particules ayant une taille inférieure à 40 µm et dans celles ayant une taille inférieure à 10 µm, etc.
- Par « impuretés», on entend les constituants inévitables, introduits involontairement et nécessairement avec les matières premières ou résultant de réactions avec ces constituants. Les impuretés ne sont pas des constituants nécessaires, mais seulement tolérés. De préférence la quantité des impuretés est inférieure à 2%, inférieure à 1%, inférieure à 0,5%, voire sensiblement nulle.
- Les produits AZS sont des produits, de préférence électrofondus, dont les constituants principaux sont l'alumine (Al₂O₃), la zircone (ZrO₂) et la silice (SiO₂). Autrement dit, l'alumine, la zircone et la silice sont les constituants dont les teneurs massiques sont les plus élevées. Ces produits conviennent bien pour la fabrication des fours de verrerie. Plus particulièrement, les produits AZS actuels sont principalement utilisés pour les zones en contact avec le verre en fusion ainsi que pour la superstructure des fours de verrerie. Les produits AZS comprennent notamment des produits commercialisés par Saint-Gobain SEFPRO, tels que l'ER-1681, l'ER-1685 ou l'ER-1711.
- Lorsqu'il est fait référence à ZrO₂ ou à la zircone il y a lieu de comprendre ZrO₂ et les traces de HfO₂. En effet, un peu de HfO₂, chimiquement indissociable du ZrO₂ dans un procédé de fusion et présentant des propriétés semblables, est toujours naturellement présent dans les sources de zircone à des teneurs généralement inférieures à 2%. L'oxyde d'hafnium n'est alors pas considéré comme une impureté. La teneur en HfO₂ dans les particules AZS est de préférence inférieure à 5%, inférieure à 3%, inférieure à 2%.
- On appelle « fibres » des structures allongées, typiquement de diamètre de 1 µm à 1 mm et de longueur allant jusqu'à 60 mm environ.
- Tous les pourcentages de la présente description sont des pourcentages en masse, sauf mention contraire.

### Description détaillée du produit non façonné

### Généralités

Un produit non façonné selon l'invention peut être conditionné en sacs ou en fûts. De préférence, le produit non façonné est prêt à emploi, c'est-à-dire incorpore tous les constituants sauf l'eau.

De préférence, l'ensemble des particules (a) et (b) représente plus de 95%, de préférence plus de 97%, de préférence plus de 98%, voire plus de 99% de la masse du produit non façonné. De préférence, le produit non façonné présente une composition chimique telle que la somme Al₂O₃ + ZrO₂ + SiO₂ + Cr₂O₃ ≥ 85%, de préférence ≥ 90%, de préférence ≥ 92%, voire supérieure à 94%, voire supérieure à 95%.

Dans un mode de réalisation, le produit non façonné présente une composition chimique telle que la somme Al₂O₃ + ZrO₂ + SiO₂ ≥ 85%, de préférence ≥ 90%, de préférence ≥ 92%, voire supérieure à 94%, voire supérieure à 95%.

Dans un mode de réalisation, le produit non façonné présente la composition massique suivante, pour un total de plus de 95%, de préférence pour un total de plus de 97% :

| | |
|---|---|
| - Al₂O₃ : | 85% - 97%, de préférence ≥ 90%, et/ou ≤ 94% |
| - SiO₂ : | ≥ 1%, de préférence ≥ 2% et/ou ≤ 11%, de préférence ≤ 9%, de préférence ≤ 7%. |

Dans un mode de réalisation, le produit non façonné présente la composition massique suivante, pour un total de plus de 95%, de préférence pour un total de plus de 97% :

| | |
|---|---|
| - Al₂O₃ : | 43% - 60% |
| - ZrO₂ : | 20% - 43% |
| - SiO₂ : | 10% - 26%. |

De préférence,

| | |
|---|---|
| - Al₂O₃ : | ≥ 45%, de préférence ≥ 50% et/ou ≤ 58%, de préférence ≤ 55%, et/ou |
| - ZrO₂ : | ≥ 25% et/ou ≤ 35%, et/ou |
| - SiO₂ : | ≥ 12%, de préférence ≥ 14%, de préférence ≥ 15% et/ou ≤ 23%, de préférence ≤ 19%. |

Dans un mode de réalisation, le produit non façonné présente la composition massique suivante, pour un total de plus de 95%, de préférence pour un total de plus de 97% :

| | |
|---|---|
| - Al₂O₃ : | 5% - 60%, |
| - ZrO₂ : | ≤ 35%, |
| - SiO₂ : | 5% - 25%, |
| - Cr₂O₃ : | 10% - 90%. |

De préférence,

| | |
|---|---|
| - Al₂O₃ : | ≥ 40%, de préférence ≥ 50% et/ou ≤ 60%, et/ou |
| - ZrO₂ : | ≥ 5%, de préférence ≥ 10% et/ou ≤ 30%, voire ≤ 20%, et/ou |
| - SiO₂ : | ≥ 10% et/ou ≤ 20%, et/ou |
| - Cr₂O₃ : | ≥ 15%, de préférence ≥ 20% et/ou ≤ 65%, voire ≤ 60%. |

Dans un mode de réalisation préféré, l'ensemble des particules (a) et (b) présente une composition dont le complément à 100% aux oxydes Al₂O₃, SiO₂, ZrO₂ et Cr₂O₃ est constitué de CaO et/ou B₂O₃ et/ou Na₂O et/ou P₂O₅ et/ou MgO et/ou K₂O et/ou BaO et/ou SrO et/ou ZnO et/ou Li₂O et/ou TiO₂ (qui résultent classiquement de la présence d'un verre) et d'impuretés. Les impuretés peuvent être par exemple des particules métalliques.

De préférence, la taille maximale de l'ensemble des particules (a) et (b), de préférence la taille maximale des particules d'un produit non façonné selon l'invention est inférieure ou égale à 2 mm, voire inférieure ou égale à 1,5 mm. Avantageusement, la coulabilité du mélange humide à haute température en est améliorée.

De préférence, l'ensemble des particules (a) et (b), de préférence l'ensemble des particules du produit non façonné se répartissent de la manière suivante, en pourcentages massiques :

| | |
|---|---|
| - fraction < 0,5 µm : | ≤ 7%, de préférence ≤ 6%, de préférence ≤ 5%, et/ou ≥ 2%, et/ou |
| - fraction < 2 µm : | ≥ 5%, de préférence ≥ 6%, de préférence ≥ 7% et/ou de préférence ≤ 18%, de préférence ≤ 16%, de préférence ≤ 14%, de préférence ≤ 12%, et/ou |
| - fraction < 10 µm : | ≥ 16%, de préférence ≥ 19%, de préférence ≥ 20% et/ou, de préférence ≤ 40%, de préférence ≤ 35%, de préférence ≤ 33%, de préférence ≤ 30%, de préférence ≤ 28%, et/ou |
| - fraction < 40 µm : | ≥ 27%, de préférence ≥ 29%, de préférence ≥ 30%, de préférence ≥ 33%, de préférence ≥ 35%, de préférence ≥ 37% et/ou de préférence ≤ 50%, de préférence ≤ 47%, de préférence ≤ 45%, de préférence ≤ 42%, et/ou |
| - fraction comprise entre 2 µm et 40 µm : | ≥ 16% et/ou ≤ 40%. |

De préférence, les particules du produit non façonné non façonné se répartissent de la manière suivante :

| | |
|---|---|
| - fraction < 0,5 µm : | 1% - 6%, et |
| - fraction < 2 µm : | 6% - 16%, et |
| - fraction < 10 µm : | 16% - 35%, et |
| - fraction < 40 µm : | 27% - 47%, et |
| - taille maximale des particules: | ≤ 2,5 mm, de préférence ≤ 2 mm. |

De préférence encore, les particules du produit non façonné se répartissent de la manière suivante :

| | |
|---|---|
| - fraction < 0,5 µm : | 1% - 5%, et |
| - fraction < 2 µm : - fraction < 10 µm : - fraction < 40 µm : | 7% - 12%, et 19% - 28%, et 29% - 45%, et |
| - taille maximale des particules: | ≤ 2,5 mm, de préférence ≤ 2 mm. |

Des modèles de compaction classiques comme le modèle de Fuller-Bolomey ou le modèle d'Andréasen peuvent être utilisés pour déterminer la distribution granulométrique la plus adaptée.

### Particules (a)

Les particules (a) peuvent présenter des compositions différentes les unes des autres. Dans un mode de réalisation, toutes les particules (a) présentent de préférence la même composition. De préférence, elles sont homogènes.

Les particules (a) peuvent être constituées à partir d'une ou plusieurs sources de matières premières, présentant des analyses chimiques différentes. Les distributions granulométriques des particules peuvent également différer selon lesdites sources.

Les sources suivantes peuvent notamment être utilisées :
- un produit réfractaire électrofondu tels que le JARGAL M, produit et commercialisé par la Société Européenne des Produits Réfractaires, présentant l'analyse chimique typique suivante : Al₂O₃ : 95%, SiO₂ : 0,5%, Na₂O : 4%, autres : 0,5%, la taille des particules de JARGAL M étant de préférence supérieure à 50 µm et inférieure à 10 mm ;
- des produits réfractaires électrofondus tels que l'ER-1681 ou l'ER-1711 produits et commercialisés par la Société Européenne des Produits Réfractaires. Ces deux produits, appelés dans le tableau 1 « particules AZS » (du fait de leurs teneurs en Al₂O₃, ZrO₂ et SiO₂), contiennent en pourcentage en masse, sur la base des oxydes :
   32 à 54% de ZrO₂, 36 à 51% d' Al₂O₃, 10 à 16% de SiO₂ et 0,2 à 1,5% de Na₂O ;
- de la mullite, fondue ou frittée, par exemple une poudre qui contient 76,5% d'Al₂O₃ et 22,5% de SiO₂ et dont la taille des particules varie de 0,7 à 1,5 mm ;
- des produits contenant de l'oxyde de chrome et présentant l'analyse chimique suivante, en pourcentage en masse sur la base des oxydes :
   Cr₂O₃ + Al₂O₃ + ZrO₂ + MgO + Fe₂O₃ + SiO₂ + TiO₂ ≥ 90%, de préférence ≥ 95%, et Cr₂O₃ + Al₂O₃ ≥ 40%, voire ≥ 50%, voire ≥ 60%, voire ≥ 70%, voire ≥ 80%, voire ≥ 90%, voire même ≥ 95%, et Cr₂O₃ ≥ 9%, voire ≥ 15%, voire ≥ 20%, voire ≥ 29%, voire ≥ 39%, voire ≥ 49%, voire ≥ 59%, voire ≥ 70%, voire ≥ 80%, voire ≥ 90%, et 20% ≥ SiO₂ ≥ 0,5%, et autres oxydes : ≤ 10%, de préférence ≤ 5% ;
- des produits à forte teneur en zircone, tels que la zircone CC10 commercialisée par la Société Européenne des Produits Réfractaires. Ce produit contient plus de 99% de ZrO₂ et la taille médiane (D₅₀) des particules de zircone est de 3,5 µm ;
- de l'alumine électrofondue, se présentant sous la forme d'une poudre dont les particules ont une taille de préférence comprise entre 10 µm et 10 mm ;
- de l'alumine tabulaire, se présentant sous la forme d'une poudre dont les particules ont une taille de préférence comprise entre 10 µm et 10 mm;
- de l'alumine calcinée, se présentant sous la forme d'une poudre dont les particules ont une taille de préférence comprise entre 1 µm et 50 µm ;
- de l'oxyde de chrome pigmentaire, contenant plus de 98,5% de Cr₂O3, se présentant sous la forme d'une poudre présentant une taille médiane ≤ 10 µm, voire ≤ 5 µm, voire ≤ 1 µm ;
- de l'alumine réactive, ou un mélange d'alumines réactives, contenant plus de 99% d'Al₂O₃, la taille médiane des particules d'alumine réactive pouvant de préférence varier de 0,5 µm à 3 µm.

### Particules (b)

Les particules (b) peuvent présenter des compositions différentes les unes des autres.

Dans un mode de réalisation, toutes les particules (b) en vitrocéramique et/ou toutes les particules (b) en verre, en particulier en verre précurseur de vitrocéramique sont constituées en le même matériau.

De préférence, les particules (b) en un verre présentent une température de transition vitreuse inférieure à 1000°C, de préférence inférieure à 900°C, voire inférieure à 800°C.

Une quantité de particules (b) supérieure à 15% de la masse du produit non façonné diminue la résistance à la corrosion de manière trop importante. Une quantité de particules (b) inférieure à 2% de la masse du produit non façonné ne permet pas de lier entre elles de manière satisfaisante les particules (a) après mise en place dudit produit non façonné et ne permet pas d'obtenir un mélange humide auto-coulable à chaud.

Dans un mode de réalisation particulier du premier mode de réalisation principal, l'ensemble des particules (b) comporte des particules de verre, de préférence est constitué de particules de verre présentant la composition chimique massique suivante :

| | |
|---|---|
| - SiO₂ : | 70% - 75%, |
| - Al₂O₃ : | ≤ 2%, |
| - CaO : | 8% - 12%, |
| - Na₂O : | 11% - 14%, |
| - K₂O : | ≤ 4%, |
| - MgO : | ≤ 6%, |
| - Autres : | ≤ 3%. |

Le produit non façonné est alors particulièrement bien adapté pour être utilisé dans un four de fusion de verre sodocalcique.

Dans un mode de réalisation particulier du premier mode de réalisation principal, l'ensemble des particules (b) comporte des particules de verre, de préférence est constitué de particules de verre présentant la composition chimique massique suivante :

| | |
|---|---|
| - SiO₂ : | 57% - 65%, |
| - Al₂O₃ : | ≤ 3%, |
| - CaO: | 6% - 8%, |
| - Na₂O : | 14% - 18%, |
| - K₂O: | ≤ 1%, |
| - MgO: | 3% - 5%, |
| - B₂O₃: | 5% - 12%, |
| - Autres : | ≤ 3%. |

Le produit non façonné est alors particulièrement bien adapté pour être utilisé dans un four de fusion de verre pour l'isolation, voire un four de fusion de verre sodocalcique.

Dans un mode de réalisation particulier du premier mode de réalisation principal, l'ensemble des particules (b) comporte des particules de verre, de préférence est constitué de particules de verre présentant la composition chimique massique suivante :

| | |
|---|---|
| - SiO₂ : | 54% - 63%, |
| - Al₂O₃ : | 14% - 20%, |
| - CaO: | 4% - 17%, |
| - Na₂O : | ≤ 1%, |
| - MgO: | ≤ 5%, |
| - B₂O₃ : | 6% - 12%, |
| - SrO+BaO+ZnO: | 3% - 12%. |

Le produit non façonné est alors particulièrement bien adapté pour être utilisé dans un four de fusion de verre de renforcement, et dans un four de verre pour l'isolation, voire un four de fusion de verre sodocalcique.

De préférence, plus de 50%, de préférence plus de 70%, de préférence plus de 90%, de préférence plus de 95%, de préférence sensiblement 100% des particules (b) vitrocéramiques, en pourcentage en masse sur la base des particules vitrocéramiques, présentent un taux de cristallisation supérieur à 5%, de préférence supérieur à 10%, voire supérieur à 15% et de préférence inférieur à 80%, de préférence inférieur à 70%, de préférence inférieur à 60%, de préférence inférieur à 50%.

De préférence, les particules (b) vitrocéramiques présentent des microcristallites de wollastonite et/ou de pseudowollastonite et/ou d'anorthite et/ou de gehlenite et/ou de virgilite et/ou de spodumène et/ou d'indialite et/ou de cordiérite et/ou de beta-quartz et/ou de cristobalite et/ou de tridymite et/ou de mullite et/ou de clinoenstatite et/ou de spinelle et/ou de diopside et/ou de zirconolite et/ou de protoenstatite et/ou de forstérite et/ou de sapphirine et/ou de rankinite et/ou de bredigite et/ou d'alite et/ou de grossite et/ou d'albite.

De préférence, les particules (b) de verre précurseur de vitrocéramique présentent une analyse chimique apte à former, par traitement thermique de cristallisation, des microcristallites de wollastonite et/ou de pseudowollastonite et/ou d'anorthite et/ou de gehlenite et/ou de virgilite et/ou de spodumène et/ou d'indialite et/ou de cordiérite et/ou de beta-quartz et/ou de cristobalite et/ou de tridymite et/ou de mullite et/ou de clinoenstatite et/ou de spinelle et/ou de diopside et/ou de zirconolite et/ou de protoenstatite et/ou de forstérite et/ou de sapphirine et/ou de rankinite et/ou de bredigite et/ou d'alite et/ou de grossite et/ou d'albite.

De préférence, le verre précurseur de vitrocéramique présente une température de transition vitreuse supérieure à 700°C, voire supérieure 750°C.

Dans un mode de réalisation particulier du deuxième mode de réalisation principal, l'ensemble des particules (b) comporte des particules en un verre précurseur de vitrocéramique, de préférence est constituées de particules en un verre précurseur de vitrocéramique présentant la composition chimique massique suivante, en pourcentages massiques sur la base des oxydes et pour un total de plus de 95%, plus de 98%, de préférence de sensiblement 100% :
- SiO₂ : 45% - 75%, et
- Al₂O₃ : 5% - 40%, et
- CaO + MgO + Li₂O : 3% - 30%,
- agents de nucléation, de préférence choisis parmi TiO₂, ZrO₂, P₂O₅ et leurs mélanges, exprimés sous une forme oxyde : 0,1% - 20%, de préférence 1% - 10%, de préférence 1% - 5%.

Dans un mode de réalisation particulier du deuxième mode de réalisation principal, l'ensemble des particules (b) comporte des particules en un verre précurseur de vitrocéramique, de préférence est constitué de particules en un verre précurseur de vitrocéramique présentant une analyse chimique apte à former, par traitement thermique de cristallisation, des microcristallites de wollastonite et/ou de pseudowollastonite et/ou d'anorthite et/ou de gehlenite et/ou de virgilite et/ou de spodumène et/ou d'indialite et/ou de cordiérite et/ou de beta-quartz et/ou de cristobalite et/ou de tridymite et/ou de mullite et/ou de clinoenstatite et/ou de spinelle et/ou de diopside et/ou de zirconolite et/ou de protoenstatite et/ou de forstérite et/ou de sapphirine et/ou de rankinite et/ou de bredigite et/ou d'alite et/ou de grossite et/ou d'albite.Dans un mode de réalisation particulier du deuxième mode de réalisation principal, l'ensemble des particules (b) comporte des particules de vitrocéramique, de préférence est constitué de particules de vitrocéramique présentant des microcristallites de wollastonite et/ou de pseudowollastonite et/ou d'anorthite et/ou de gehlenite et/ou de virgilite et/ou de spodumène et/ou d'indialite et/ou de cordiérite et/ou de beta-quartz et/ou de cristobalite et/ou de tridymite et/ou de mullite et/ou de clinoenstatite et/ou de spinelle et/ou de diopside et/ou de zirconolite et/ou de protoenstatite et/ou de forstérite et/ou de sapphirine et/ou de rankinite et/ou de bredigite et/ou d'alite et/ou de grossite et/ou d'albite.

### Particules (c)

De manière remarquable, un produit non façonné selon l'invention comporte moins de 2% de particules (c) de ciment hydraulique. Comme le montrent les exemples décrits ci-après, les inventeurs ont découvert que, de manière surprenante, le ciment hydraulique a un effet préjudiciable lorsqu'il est associé aux autres constituants d'un produit non façonné selon l'invention. Bien que l'ajout de ciment soit une mesure classique dans les produits destinés à la réparation des fours de verrerie, la teneur en ciment hydraulique doit être, selon l'invention la plus faible possible.

Le ciment hydraulique peut être en particulier un ciment alumineux, présentant notamment une teneur en alumine supérieure à 69%.

### Autres constituants (d)

La teneur en « autres constituants » est acceptable lorsqu'elle est inférieure à 7%.

La teneur en « autres constituants » est de préférence ≤ 5%, ≤ 3%, ≤ 2%, ≤ 1%.

De préférence, le produit non façonné selon l'invention comporte un agent tensio-actif, de préférence dans une teneur massique de 0,1% à 1%, de préférence supérieure ou égale à 0,2% et/ou inférieure à 0,5%, de préférence encore inférieure à 0,4%. Le rôle de cet agent tensio-actif est notamment de modifier les propriétés rhéologiques du produit non façonné pour en faciliter le pompage. On utilise de préférence des agents tensio-actifs choisis parmi les polyphosphates de sodium à longue chaine, les polyacrylates de sodium, les polyacrylates d'ammonium, les polycarboxylates modifiés, et leurs mélanges. De préférence, les agents tensio-actifs sont choisis parmi les polycarboxylates modifiés, de préférence de type éther polycarboxylate modifié, de préférence encore à base de polyéthylène glycol.

De préférence, le produit non façonné selon l'invention comporte encore au moins un adjuvant anti-ségrégation, de préférence dans une proportion de 0,05% à 0,3%. L'adjuvant antiségrégation peut être en particulier choisi parmi les éthers d'amidon.

Le choix d'un tensio-actif et d'un adjuvant anti-ségrégation parmi les tensio-actifs et adjuvants anti-ségrégation généralement utilisés par l'homme du métier est guidé par les résultats d'essais simples, tels que ceux décrits dans la présente demande, en fonction des performances recherchées.

Dans un mode de réalisation, les fibres, de préférence organiques, sont par exemple des fibres de polypropylène, de polyacrylonitrile ou de polyvinyl alcool.

Dans un mode de réalisation, le produit non façonné comporte plus de 0,01% de fibres. De préférence la longueur moyenne (moyenne arithmétique) de ces fibres est supérieure à 6 mm, de préférence comprise entre 18 et 24 mm.

Ces fibres ne sont cependant pas indispensables. De préférence, le produit non façonné ne comporte pas de fibres.

### Modes de réalisation particuliers

Dans un mode de réalisation, le produit non façonné présente une composition chimique telle que la somme Al₂O₃ + ZrO₂ + SiO₂ ≥ 85%, de préférence ≥ 90%, de préférence ≥ 92%, voire supérieure à 94%, voire supérieure à 95%.

Dans un mode de réalisation, le produit non façonné présente la composition massique suivante, pour un total de plus de 95%, de préférence pour un total de plus de 97% :

| | |
|---|---|
| - Al₂O₃ : | 85% - 97%, de préférence ≥ 90%, et/ou ≤ 94% |
| - SiO₂ : | ≥ 1%, de préférence ≥ 2% et/ou ≤ 10%, de préférence ≤ 9%, de préférence ≤ 7%. |

Dans un mode de réalisation, le produit non façonné présente la composition massique suivante, pour un total de plus de 95%, de préférence pour un total de plus de 97% :

| | |
|---|---|
| - Al₂O₃ : | 43% - 60% |
| - ZrO₂ : | 20% - 43% |
| - SiO₂ : | 10% - 26%. |

De préférence,

| | |
|---|---|
| - Al₂O₃ : | ≥ 45%, de préférence ≥ 50% et/ou ≤ 58%, de préférence ≤ 55%, et/ou |
| - ZrO₂ : | ≥ 25% et/ou ≤ 35%, et/ou |
| - SiO₂ : | ≥ 12%, de préférence ≥ 14%, de préférence ≥ 15% et/ou ≤ 23%, de préférence ≤ 19%. |

Dans un mode de réalisation, le produit non façonné présente la composition massique suivante, pour un total de plus de 95%, de préférence pour un total de plus de 97% :

| | |
|---|---|
| - Al₂O₃ : | 5% - 60%, |
| - ZrO₂ : | ≤ 35%, |
| - SiO₂ : | 5% - 25%, |
| - Cr₂O₃ : | 10% - 90%. |

De préférence,

| | |
|---|---|
| - Al₂O₃ : | ≥ 40%, de préférence ≥ 50% et/ou ≤ 60%, et/ou |
| - ZrO₂ : | ≥ 5%, de préférence ≥ 10% et/ou ≤ 30%, voire ≤ 20%, et/ou |
| - SiO₂ : | ≥ 10% et/ou ≤ 20%, et/ou |
| - Cr₂O₃ : | ≥ 15%, de préférence ≥ 20% et/ou ≤ 65%, voire ≤ 60%. |

Dans un mode de réalisation, le produit non façonné présente la composition massique suivante, pour un total de plus de 95%, de préférence pour un total de plus de 97%, de préférence pour plus de 99% :

| | |
|---|---|
| - Al₂O₃ : | 85% - 97%, de préférence ≥ 90%, et/ou ≤ 94% |
| - SiO₂ : | ≥ 1%, de préférence ≥ 2% et/ou ≤ 10%, de préférence ≤ 9%, de préférence ≤ 7%, |

et de préférence, l'ensemble des particules (a):
- comporte de l'alumine réactive en une quantité massique supérieure à 2%, supérieure à 4%, supérieure à 5%, et/ou inférieure à 13%, inférieure à 10%, sur la base de la masse du produit non façonné, et/ou
- comporte de l'alumine calcinée en une quantité massique supérieure à 20%, supérieure à 25%, et/ou inférieure à 38%, inférieure à 35%, sur la base de la masse du produit non façonné, et/ou
- comporte de l'alumine électrofondue en une quantité massique supérieure à 50%, supérieure à 55%, et/ou inférieure à 70%, inférieure à 65%, sur la base de la masse du produit non façonné,
et de préférence, l'ensemble des particules (b) du produit non façonné présente la composition chimique suivante :

| | |
|---|---|
| - SiO₂ : | 70% - 75%, |
| - Al₂O₃ : | ≤ 2%, |
| - CaO : | 8% - 12%, |
| - Na₂O : | 11% - 14%, |
| - K₂O : | ≤ 4%, |
| - MgO : | ≤ 6%, |
| - Autres : | ≤ 3%. |

Dans un mode de réalisation, le produit non façonné présente la composition massique suivante, pour un total de plus de 95%, de préférence pour un total de plus de 97%, de préférence pour plus de 99% :

| | |
|---|---|
| - Al₂O₃ : | 43% - 60% |
| - ZrO₂ : | 20% - 43% |
| - SiO₂ : | 10% - 26%. |

De préférence,

| | |
|---|---|
| - Al₂O₃ : | ≥ 45%, de préférence ≥ 50% et/ou ≤ 58%, de préférence ≤ 55%, et/ou |
| - ZrO₂ : | ≥ 25% et/ou ≤ 35%, et/ou |
| SiO₂ : | ≥ 12%, de préférence ≥ 14%, de préférence ≥ 15% et/ou ≤ 23%, de préférence ≤ 19%. |

et de préférence, l'ensemble des particules (a):
- comporte des particules d'AZS en une quantité massique supérieure à 80%, de préférence supérieure à 85% et/ou inférieure à 95%, sur la base de la masse du produit non façonné, et/ou
- comporte de l'alumine réactive en une quantité massique supérieure à 3%, supérieure à 5%, et/ou inférieure à 10%, inférieure à 8%, sur la base de la masse du produit non façonné,
et de préférence, l'ensemble des particules (b) présente la composition chimique suivante :

| | |
|---|---|
| - SiO₂ : | 70% - 75%, |
| - Al₂O₃ : | ≤ 2%, |
| - CaO : | 8% - 12%, |
| - Na₂O : | 11% - 14%, |
| - K₂O : | ≤ 4%, |
| - MgO : | ≤ 6%, |
| - Autres : | ≤ 3%. |

Dans un mode de réalisation, le produit non façonné présente la composition massique suivante, pour un total de plus de 95%, de préférence pour un total de plus de 97%, de préférence pour plus de 99% :

| | |
|---|---|
| - Al₂O₃ : | 5% - 60%, |
| - ZrO₂ : | ≤ 35%, |
| - SiO₂ : | 5% - 25%, |
| - Cr₂O₃ : | 10% - 90%, |

De préférence,

| | |
|---|---|
| - Al₂O₃ : | ≥ 40%, de préférence ≥ 50% et/ou ≤ 60%, et/ou |
| - ZrO₂ : | ≥ 5%, de préférence ≥ 10% et/ou ≤ 30%, voire ≤ 20%, et/ou |
| - SiO₂ : | ≥ 10% et/ou ≤ 20%, et/ou |
| - Cr₂O₃ : | ≥ 15%, de préférence ≥ 20% et/ou ≤ 65%, voire ≤ 60%, |

et de préférence, l'ensemble des particules (a) du produit non façonné :
- comporte des particules présentant l'analyse chimique suivante, en pourcentage en masse sur la base des oxydes : Cr₂O₃ + Al₂O₃ + ZrO₂ + MgO + Fe₂O₃ + SiO₂ + TiO₂ ≥ 90%, de préférence ≥ 95%, et Cr₂O₃ + Al₂O₃ ≥ 40%, voire ≥ 50%, voire ≥ 60%, voire ≥ 70%, voire ≥ 80%, voire ≥ 90%, voire même ≥ 95%, et Cr₂O₃ ≥ 9%, voire ≥ 15%, voire ≥ 20%, voire ≥ 29%, voire ≥ 39%, voire ≥ 49%, voire ≥ 59%, voire ≥ 70%, voire ≥ 80%, voire ≥ 90%, et 20% ≥ SiO₂ ≥ 0,5%, et autres oxydes : ≤ 10%, de préférence ≤ 5%, en une quantité massique supérieure à 10%, supérieure à 20%, supérieure à 30% et/ou inférieure à 95%, sur la base de la masse du produit non façonné, et/ou
- comporte de l'alumine réactive en une quantité massique supérieure à 2%, supérieure à 3%, supérieure à 4%, et/ou inférieure à 13%, inférieure à 10%, inférieure à 8%, sur la base de la masse du produit non façonné, et/ou
- comporte de l'alumine calcinée en une quantité massique supérieure à 5%, supérieure à 10%, et/ou inférieure à 38%, inférieure à 35%, inférieure à 30%, inférieure à 25%, inférieure à 20%, sur la base de la masse du produit non façonné, et/ou
- comporte de l'alumine électrofondue en une quantité massique supérieure à 10%, supérieure à 20%, supérieure à 25%, et/ou inférieure à 50%, inférieure à 40%, sur la base de la masse du produit non façonné, et/ou
- comporte des particules AZS en une quantité massique supérieure à 10%, supérieure à 20% et/ou inférieure à 50%, inférieure à 40%, sur la base de la masse du produit non façonné, et/ou
- comporte des particules d'oxyde de chrome pigmentaire en une quantité massique supérieure à 5%, supérieure à 10%, et/ou inférieure à 25%, inférieure à 20%, sur la base de la masse du produit non façonné,
et de préférence, l'ensemble des particules (b) présente la composition chimique suivante :

| | |
|---|---|
| - SiO₂ : | 57% - 65%, |
| - Al₂O₃ : | ≤ 3%, |
| - CaO : | 6% - 8%, |
| - Na₂O : | 14% - 18%, |
| - K₂O : | ≤ 1%, |
| - MgO : | 3% - 5%, |
| - B₂O₃ : | 5% - 12%, |
| - Autres : | ≤ 3%. |

Dans un mode de réalisation, le produit non façonné présente la composition massique suivante, pour un total de plus de 95%, de préférence pour un total de plus de 97%, de préférence pour plus de 99% :

| | |
|---|---|
| - Al₂O₃ : | 85% - 97%, de préférence ≥ 90%, et/ou ≤ 94% |
| - SiO₂ : | ≥ 1%, de préférence ≥ 2% et/ou ≤ 10%, de préférence ≤ 9%, de préférence ≤ 7%, |

et de préférence, l'ensemble des particules (a):
- comporte de l'alumine réactive en une quantité massique supérieure à 2%, supérieure à 4%, supérieure à 5%, et/ou inférieure à 13%, inférieure à 10%, sur la base de la masse du produit non façonné, et/ou
- comporte de l'alumine calcinée en une quantité massique supérieure à 20%, supérieure à 25%, et/ou inférieure à 38%, inférieure à 35%, sur la base de la masse du produit non façonné, et/ou
- comporte de l'alumine électrofondue en une quantité massique supérieure à 50%, supérieure à 55%, et/ou inférieure à 70%, inférieure à 65%, sur la base de la masse du produit non façonné,
et de préférence, l'ensemble des particules (b) du produit non façonné présente la composition chimique suivante, en pourcentages massiques sur la base des oxydes et pour un total de plus de 95%, plus de 98%, de préférence de sensiblement 100% :
- SiO₂ : 45% - 75%, et
- Al₂O₃ : 5% - 40%, et
- CaO + MgO + Li₂O : 3% - 30%,
- agents de nucléation, de préférence choisis parmi TiO₂, ZrO₂, P₂O₅ et leurs mélanges, exprimés sous une forme oxyde : 0,1% - 20%, de préférence 1% - 10%, de préférence 1% - 5%.

Dans un mode de réalisation, le produit non façonné présente la composition massique suivante, pour un total de plus de 95%, de préférence pour un total de plus de 97%, de préférence pour plus de 99% :

| | |
|---|---|
| - Al₂O₃ : | 43% - 60% |
| - ZrO₂ : | 20% - 43% |
| - SiO₂ : | 10% - 26%. |

De préférence,

| | |
|---|---|
| - Al₂O₃ : | ≥ 45%, de préférence ≥ 50% et/ou ≤ 58%, de préférence ≤ 55%, et/ou |
| - ZrO₂ : | ≥ 25% et/ou ≤ 35%, et/ou |
| SiO₂ : | ≥ 12%, de préférence ≥ 14%, de préférence ≥ 15% et/ou ≤ 23%, de préférence ≤ 19%. |

et de préférence, l'ensemble des particules (a):
- comporte des particules d'AZS en une quantité massique supérieure à 80%, de préférence supérieure à 85% et/ou inférieure à 95%, sur la base de la masse du produit non façonné, et/ou
- comporte de l'alumine réactive en une quantité massique supérieure à 3%, supérieure à 5%, et/ou inférieure à 10%, inférieure à 8%, sur la base de la masse du produit non façonné,
et de préférence, l'ensemble des particules (b) présente la composition chimique suivante, en pourcentages massiques sur la base des oxydes et pour un total de plus de 95%, plus de 98%, de préférence de sensiblement 100% :
- SiO₂ : 45% - 75%, et
- Al₂O₃ : 5% - 40%, et
- CaO + MgO + Li₂O : 3% - 30%,
- agents de nucléation, de préférence choisis parmi TiO₂, ZrO₂, P₂O₅ et leurs mélanges, exprimés sous une forme oxyde : 0,1% - 20%, de préférence 1% - 10%, de préférence 1% - 5%.

Dans un mode de réalisation, le produit non façonné présente la composition massique suivante, pour un total de plus de 95%, de préférence pour un total de plus de 97%, de préférence pour plus de 99% :

| | |
|---|---|
| - Al₂O₃ : | 5% - 60%, |
| - ZrO₂ : | ≤ 35%, |
| - SiO₂ : | 5% - 25%, |
| - Cr₂O₃ : | 10% - 90%, |

De préférence,

| | |
|---|---|
| - Al₂O₃: | ≥ 40%, de préférence ≥ 50% et/ou ≤ 60%, et/ou |
| - ZrO₂ : | ≥ 5%, de préférence ≥ 10% et/ou ≤ 30%, voire ≤ 20%, et/ou |
| - SiO₂ : | ≥ 10% et/ou ≤ 20%, et/ou |
| - Cr₂O₃ : | ≥ 15%, de préférence ≥ 20% et/ou ≤ 65%, voire ≤ 60%, |

et de préférence, l'ensemble des particules (a) du produit non façonné :
- comporte des particules présentant l'analyse chimique suivante, en pourcentage en masse sur la base des oxydes : Cr₂O₃ + Al₂O₃ + ZrO₂ + MgO + Fe₂O₃ + SiO₂ + TiO₂ ≥ 90%, de préférence ≥ 95%, et Cr₂O₃ + Al₂O₃ ≥ 40%, voire ≥ 50%, voire ≥ 60%, voire ≥ 70%, voire ≥ 80%, voire ≥ 90%, voire même ≥ 95%, et Cr₂O₃ ≥ 9%, voire ≥ 15%, voire ≥ 20%, voire ≥ 29%, voire ≥ 39%, voire ≥ 49%, voire ≥ 59%, voire ≥ 70%, voire ≥ 80%, voire ≥ 90%, et 20% ≥ SiO₂ ≥ 0,5%, et autres oxydes : ≤ 10%, de préférence ≤ 5%, en une quantité massique supérieure à 10%, supérieure à 20%, supérieure à 30% et/ou inférieure à 95%, sur la base de la masse du produit non façonné, et/ou
- comporte de l'alumine réactive en une quantité massique supérieure à 2%, supérieure à 3%, supérieure à 4%, et/ou inférieure à 13%, inférieure à 10%, inférieure à 8%, sur la base de la masse du produit non façonné, et/ou
- comporte de l'alumine calcinée en une quantité massique supérieure à 5%, supérieure à 10%, et/ou inférieure à 38%, inférieure à 35%, inférieure à 30%, inférieure à 25%, inférieure à 20%, sur la base de la masse du produit non façonné, et/ou
- comporte de l'alumine électrofondue en une quantité massique supérieure à 10%, supérieure à 20%, supérieure à 25%, et/ou inférieure à 50%, inférieure à 40%, sur la base de la masse du produit non façonné, et/ou
- comporte des particules AZS en une quantité massique supérieure à 10%, supérieure à 20% et/ou inférieure à 50%, inférieure à 40%, sur la base de la masse du produit non façonné, et/ou
- comporte des particules d'oxyde de chrome pigmentaire en une quantité massique supérieure à 5%, supérieure à 10%, et/ou inférieure à 25%, inférieure à 20%, sur la base de la masse du produit non façonné,
et de préférence, l'ensemble des particules (b) présente la composition chimique suivante, en pourcentages massiques sur la base des oxydes et pour un total de plus de 95%, plus de 98%, de préférence de sensiblement 100% :
- SiO₂ : 45% - 75%, et
- Al₂O₃ : 5% - 40%, et
- CaO + MgO + Li₂O : 3% - 30%,
- agents de nucléation, de préférence choisis parmi TiO₂, ZrO₂, P₂O₅ et leurs mélanges, exprimés sous une forme oxyde : 0,1% - 20%, de préférence 1% - 10%, de préférence 1% - 5%.

### Description détaillé du procédé de réparation

Un procédé de réparation selon l'invention comporte les étapes 1) à 8) décrites ci-dessus.

De préférence, à l'étape 1), les différentes matières premières sont mélangées dans un malaxeur. L'agent tensio-actif optionnel peut être mélangé à cette étape ou introduit à l'étape 5).

De préférence, à l'étape 1), la composition chimique des particules (b) est choisie de manière à ce que leur température de fusion soit inférieure à la température de la région à réparer. Dans un mode de réalisation, les particules (b) présentent sensiblement la même composition que le verre en fusion dans le four à réparer.

De préférence, à l'étape 2), la vidange du verre en fusion s'effectue à une température proche de la température de fusion du verre. Ladite vidange peut s'effectuer par exemple au travers de trous percés dans la sole, ou au travers de trous créés par le démontage d'une ou de plusieurs électrodes présentes.

A l'étape 3), optionnelle, le rinçage de la sole, notamment des zones usées s'effectue de préférence par pulvérisation d'un produit adapté pour porter à fusion les résidus de verre. De préférence ledit produit est choisi parmi le sulfate de sodium, le carbonate de sodium, la soude et leurs mélanges. Les produits permettent d'augmenter la fluidité du verre, ce qui facilite son évacuation en dehors du four. De préférence, le procédé de réparation selon l'invention comporte une étape 3).

A l'étape 4), la température dans le four est réduite à une température à laquelle le liant à chaud n'est pas à l'état solide. Autrement dit, la température dans le four est réduite à une température qui reste supérieure à la température de transition vitreuse de la phase vitreuse du liant à chaud. La température de transition vitreuse de la phase vitreuse du liant à chaud dépend de la nature du liant à chaud. Le liant à chaud est de préférence choisi pour que la température de transition vitreuse de sa phase vitreuse soit comprise entre 900°C et 1350°C, de préférence entre 1000°C et 1300°C, de préférence entre 1150°C et 1250°C.

A l'étape 5), le produit non façonné est humidifié de manière à obtenir un mélange humide, en y ajoutant une quantité d'eau de préférence supérieure à 8%, de préférence supérieure à 9% et/ou inférieure à 13%, inférieure à 12%, en masse par rapport à la masse dudit produit non façonné.

A l'étape 6), le mélange humide est de préférence pompé au moyen d'une pompe produisant une pression d'aspiration inférieure ou égale à 180 bar et acheminé dans le four, de préférence au moyen d'une cane refroidie par eau. Le mélange humide est coulé dans le four, sur la sole existante, les trous réalisés pour la vidange du verre à l'étape 2) étant préalablement rebouchés. Ledit coulage peut s'effectuer de manière à réaliser des réparations dans différentes zones de ladite sole. Le mélange humide est de préférence coulé sur toute la surface de la sole du four.

A l'étape 7), le four est maintenu à une température comprise entre 1250°C et 1400°C, de préférence entre 1300°C et 1400°C, afin de permettre le frittage dudit mélange humide, de préférence pendant un temps supérieur à 8 heures, de préférence supérieur à 10 heures et de préférence inférieur à 15 heures.

De préférence, lorsque le produit non façonné contient des particules (b) de verre précurseur de vitrocéramique, le four est maintenu à une température permettant de favoriser la nucléation et la croissance des microcristallites. L'homme du métier sait déterminer le domaine de températures permettant cette nucléation et cette croissance.

Le produit non façonné selon l'invention autorise avantageusement une faible la température de frittage et/ou un temps de maintien à ladite température réduit. Lors de cette étape, il est possible de percer la sole afin d'installer des électrodes.

A l'étape 8), la composition de verre à fondre est introduite dans le four et la température de celui-ci est augmentée jusqu'à sa température de fonctionnement.

### Exemples

Les exemples non limitatifs qui vont suivre sont donnés en vue d'illustrer l'invention.

Le caractère « auto-coulable » à chaud, la ségrégation et l'aspect après redescente en température sont évalués par le test suivant :
Un creuset réfractaire à fond plat présentant un diamètre interne égal à 170 mm et une hauteur interne égale à 45 mm est monté dans une cuve métallique présentant un diamètre égal à 400 mm. L'espace entre la paroi de la cuve et la paroi du creuset est comblé par des matériaux isolants. Un couvercle amovible en béton réfractaire d'une épaisseur égale à 100 mm est suspendu au-dessus du creuset à une hauteur comprise entre 20 mm et 30 mm. Ce couvercle présente un trou de diamètre 100 mm en son centre qui permet de laisser passer la flamme d'un brûleur au gaz positionné au-dessus dudit couvercle et d'introduire le mélange humide.

Le brûleur au gaz est allumé et l'intérieur du creuset réfractaire est porté à 1300°C, à une vitesse de montée en température de 500°C/h.

Puis l'ensemble cuve + creuset est mis en rotation à une vitesse de 6 tours par minute. 5 kg de mélange humide sont préparés dans un malaxeur à pale rotative et cuve fixe, avec un temps de malaxage de 5 minutes.

Le mélange humide est ensuite déversé dans une cornière métallique présentant une longueur de 600 mm et des bords d'une hauteur de 40 mm. Ladite cornière présente une inclinaison de 45° et une de ses extrémités est en appui sur le bord du trou central du couvercle, afin de permettre l'introduction à chaud du mélange humide dans le creuset. La hauteur maximale de chute, au début du déversement, est d'environ 175 mm. L'alimentation en mélange humide est arrêtée lorsque celui-ci atteint le haut du creuset réfractaire.

Pour les essais dans lesquels les particules (b) sont des particules de verre, la température est ensuite portée à 1450°C avec une vitesse de montée en température égale à 100°C/h, et est maintenue pendant un temps égal à 10 heures afin de permettre le frittage du mélange humide. Pour les essais dans lesquels les particules (b) sont des particules en précurseur de vitrocéramique, la température est ensuite portée à 1350°C avec une vitesse de montée en température égale à 50°C/h, et est maintenue pendant un temps égal à 10 heures afin de permettre le frittage du mélange humide et la croissance des microcristallites.

La descente en température s'effectue de manière progressive à une vitesse égale à 100°C/h et la galette de produit fritté est ensuite démoulée.

L'aspect de la galette est ensuite observé.

Le caractère auto-coulable à chaud est acquis si la galette de produit fritté présente un diamètre sensiblement égal au diamètre interne du creuset réfractaire, et si la galette ne présente pas, à l'oeil nu, un trou ou un évidement en son centre.

La galette est ensuite sciée de manière à rechercher une ségrégation. On considère qu'il y a ségrégation lorsque les faces sciées font apparaître une couche superficielle de laitance s'étendant, depuis la face supérieure de la galette, sur une profondeur de 3 mm ou plus.

La résistance à la compression à froid est mesurée au moyen d'une presse LR150K commercialisée par AMETEK-LLOYD, sur des cylindres de diamètre égal à 30 mm et de hauteur égale à 30 mm prélevés dans la galette.

Le tableau 1 fournit la composition des mélanges particulaires (a) + (b) + (c). Il indique également la distribution granulométrique des particules d'alumine électrofondue et des particules d'AZS utilisées.

L'alumine calcinée utilisée est l'alumine HVA FG commercialisée par la société Almatis.

La fumée de silice est une fumée de silice comportant plus de 90% de silice en masse, se présentant sous la forme d'une poudre dont les particules ont une taille comprise entre 0,1 et 5 µm et une taille médiane inférieure à 0,6 µm, commercialisée par la Société Européenne des Produits Réfractaires.

Le ciment utilisé est du ciment CA25R commercialisé par la société Almatis.

Les particules (b) en verre sont en un verre sodocalcique présentant l'analyse chimique suivante :

| | |
|---|---|
| - SiO₂ : | 72,3%, |
| - Al₂O₃ : | 0,5%, |
| - CaO: | 9,5%, |
| - Na₂O : | 13,4%, |
| - MgO : | 4%, |
| - Autres : | 0,3%. |

La température de transition vitreuse de ce verre est égale à 580°C. La température de transition vitreuse est déterminée par analyse thermique différentielle (ATD) sur un appareil STA409C commercialisé par la société Netsch. Les porte-échantillons sont chacun équipés d'un thermocouple permettant une mesure directe de la température du verre disposé dans un creuset en alumine frittée dense de capacité égale à 300 µl, et d'un creuset identique vide considéré comme référence. Le verre à analyser est broyé de manière à passer à travers un tamis d'ouverture égale à 160 µm. Le cycle thermique appliqué lors de la mesure consiste en une montée à une vitesse égale à 10°C/min, sous air, jusqu'à 1650°C.

Sur le thermogramme obtenu, la transition vitreuse apparait comme le premier évènement endothermique. La température de transition vitreuse est égale à la température du point d'inflexion de la courbe dans ledit premier évènement endothermique (soit « Tinfl » dans le programme utilisé).

Après broyage, les particules de verre présentent la distribution granulométrique suivante :

| | |
|---|---|
| - fraction < 0,5 µm : | 0%, et |
| - fraction < 2 µm : | 0%, et |
| - fraction < 10 µm : | 5%, et |
| - fraction < 40 µm : | 16%, et |
| - fraction < 100 µm : | 35%, et |
| - fraction < 200 µm : | 58%, et |
| - taille maximale des particules : | 1 mm. |

Les particules (b) en un verre précurseur de vitrocéramique sont préparées de la manière suivante :
Une charge de départ constituée, en pourcentages massiques, de 60,4% d'une poudre de silice de pureté égale à 98%, 23,4% d'une poudre d'alumine de pureté supérieure à 98%, 12,8% d'une poudre de carbonate de lithium, 1,6% d'une poudre d'oxyde de titane et 1,8% d'une poudre de zircone est fondue dans un creuset placé dans un four électrique. Le creuset est ensuite sorti à chaud et son contenu est coulé dans un réservoir d'eau, permettant une trempe rapide et évitant la cristallisation. Il en résulte une poudre de particules de verre précurseur de vitrocéramique. L'état amorphe de ces particules est vérifié par diffraction X. Ces particules sont ensuite séchées à 110°C pendant 48 heures.

Après séchage, les particules de verre précurseur de vitrocéramique sont broyées au concasseur à mâchoires et tamisées de manière à obtenir un ensemble de particules (b) présentant la distribution granulométrique suivante :

| | |
|---|---|
| - fraction < 0,5 µm : | 0%, et |
| - fraction < 2 µm : | 1%, et |
| - fraction < 10 µm : | 7%, et |
| - fraction < 40 µm : | 15%, et |
| - fraction < 200 µm : | 62%, et |
| - taille maximale des particules | : 1 mm |

Les particules (b) de verre précurseur de vitrocéramique obtenues présentent la composition chimique suivante, en pourcentages massiques :
- SiO₂ : 64,2%
- Al₂O₃ : 24,8%
- LiO₂ : 5,5%
- TiO₂ : 1,7%
- ZrO₂ : 1,9%
- autres : 1,9%.

La température de transition vitreuse de ce verre précurseur de vitrocéramique est inférieure à 1100°C.

Cette composition permet au verre précurseur de former des microcristallites de ZrTiO₄, de béta-quartz et de béta-spodumène lors du frittage du produit non façonné. Ledit frittage est ainsi un traitement thermique de cristallisation du verre précurseur de vitrocéramique.

L'exemple comparatif 1, « Comp 1 », est le pisé décrit dans EP 0 739 861 B1, notamment utilisé dans la réparation de fours de fusion de verre.

L'exemple comparatif 2, « comp 2 », est un béton auto-nivelant selon WO2013132442 auquel ont été ajoutées des particules (b) de verre, les particules (b) représentant 5% de la masse totale du béton auto-nivelant et du verre ajouté.

Le tableau 2 fournit les compositions chimiques des produits non façonnés humides testés, ainsi que les résultats des essais réalisés.

Les exemples « comp 2 », et 1 à 5 incorporent en tant que particules (d), 0,2% d'un agent tensio-actif de la famille des éthers polycarboxylates modifiés et 0,2% d'un adjuvant anti-ségrégation de la famille des éthers d'amidon.

Dans le tableau 2 :
- pour l'exemple « comp 1 », le complément à 100% de Al₂O₃ + SiO₂ + ZrO₂ est constitué de P₂O₅ et d'impuretés,
- pour l'exemple « comp 2 », le complément à 100% de Al₂O₃ + SiO₂ + ZrO₂ + agent tensio-actif + adjuvant anti-ségrégation est constitué de CaO apporté par le ciment hydraulique et le verre, ainsi que de Na₂O, de K₂O et de MgO apportés par le verre, et d'impuretés,
- pour les exemples 1 à 4, le complément à 100% de Al₂O₃ + SiO₂ + ZrO₂ + agent tensio-actif + adjuvant anti-ségrégation est constitué de CaO, de Na₂O, de K₂O et de MgO apportés par le verre, ainsi que d'impuretés, et
- pour l'exemple 5, le complément à 100% de Al₂O₃ + SiO₂ + ZrO₂ + agent tensio-actif + adjuvant anti-ségrégation est constitué de Li₂O et de TiO₂ apportés par le verre, ainsi que d'impuretés.

L'ajout d'eau (g) est fourni en pourcentage massique sur la base du produit non façonné.

Le tableau 2 fournit également la distribution des tailles de particules, mesurée au moyen d'un granulomètre laser HORIBA.

**Tableau 1**

| | Mélange particulaire (a) + (b) + (c), en pourcentages massiques | | | | | | | | | | |
|---|---|---|---|---|---|---|---|---|---|---|---|
| Ex. n° | Alumine électrofondue 0,5 mm - 3,5 mm | Alumine électrofondue 10 µm - 200 µm | Alumine calcinée | Alumine réactive | Fumée de silice | Ciment hydraulique | Particules AZS 0,5 mm - 2 mm | Particules AZS 40 µm - 500 µm | Particules AZS < 40 µm | Poudre de verre | Poudre de verre précurseur de vitrocéramique |
| Comp 1 | - | - | - | - | - | - | - | - | - | - | - |
| Comp 2 | 44,7 | 14,2 | 16,1 | 12,35 | 2,85 | 4,8 | 0 | 0 | 0 | 5 | 0 |
| 1 | 0 | 0 | 0 | 5 | 0 | 0 | 27 | 31 | 34 | 3 | 0 |
| 2 | 0 | 0 | 0 | 6 | 0 | 0 | 27 | 31 | 31 | 5 | 0 |
| 3 | 0 | 0 | 0 | 3 | 0 | 0 | 27 | 31 | 31 | 8 | 0 |
| 4 | 0 | 0 | 0 | 6 | 0 | 0 | 34 | 38 | 17 | 5 | 0 |
| 5 | 0 | 0 | 0 | 3 | 0 | 0 | 27 | 31 | 31 | 0 | 5 |

**Tableau 2**

| | Produit non façonné sec (pourcentages massiques) | | | Ajout | Distribution des particules (a)+(b)+(c) (pourcentages massiques) | | | | | | | | | | |
|---|---|---|---|---|---|---|---|---|---|---|---|---|---|---|---|
| N° | Al₂O₃ | SiO₂ | ZrO₂ | Eau (%) | ≤ 0,5 µm | <2 µm | < 10 µm | ≤ 40 µm | ≤ 500 µm | > 1 mm | taille maximale (mm) | Auto-coulable à chaud | ségrégation ? | Aspect après redescente en température | Résistance à la compression à froid (MPa) |
| Comp 1 | 57,2 | 12,5 | 25,1 | 5 | 10,1 | 11,7 | 37,1 | 53,9 | 80,3 | 8 | 2 | non | non | poreux | 45 |
| Comp 2 | 91 | 6,3 | 0,1 | 11 | 7 | 11,7 | 30,2 | 38,2 | 55,5 | 32,8 | 3,5 | oui | non | très fissuré et résistance mécanique très faible | n.d. |
| 1 | 52,4 | 15,8 | 29,7 | 11 | 2,5 | 9,5 | 24,6 | 41,5 | 76,2 | 11,9 | 2 | oui | non | bon | 70 |
| 2 | 51,8 | 16,8 | 28,7 | 11 | 2,4 | 8,9 | 22,9 | 39 | 76,1 | 11,9 | 2 | oui | non | bon | 65 |
| 3 | 48,9 | 18,9 | 28,7 | 11 | 1,8 | 7,7 | 21,3 | 37,8 | 75,8 | 11,9 | 2 | oui | non | bon | 60 |
| 4 | 51,8 | 16,8 | 28,7 | 11 | 2,3 | 6,9 | 16,4 | 28,6 | 69,8 | 15,1 | 2 | oui | non | bon | n.d. |
| 5 | 53,1 | 16,4 | 28,8 | 11 | 3 | 9,3 | 23,5 | 39,2 | 76,5 | 12 | 2 | oui | non | bon | 80 |

| | | | | | | | | | | | | | | | |
|---|---|---|---|---|---|---|---|---|---|---|---|---|---|---|---|
| n.d. : non déterminé | | | | | | | | | | | | | | | |

Les résultats permettent de faire les constats suivants :
- L'exemple « Comp 1 », qui ne comporte pas de particules (b) ne présente pas un caractère auto-coulable à chaud.
- L'exemple « Comp 2 » présente un caractère auto-coulable, mais après redescente en température, la galette est très fissurée et présente une résistance mécanique très faible : certaines zones peuvent être cassées manuellement. Sans être tenus par une quelconque théorie, les inventeurs attribuent de ce phénomène à la présence de 4,8% de ciment hydraulique dans le produit de l'exemple « Comp 2 ».
- L'exemple « Comp 1 » présente une résistance à la compression à froid plus faible que celle des produits non façonnés des exemples selon l'invention. L'exemple « Comp 1 » nécessite une température de frittage supérieure à 1350°C pour développer une résistance à la compression à froid similaire à celle des produits selon l'invention : la réintroduction de la composition de verre à fondre de l'étape 8) peut donc s'effectuer plus rapidement avec les produits selon l'invention. Le retour en production est ainsi plus rapide que pour le produit de l'exemple « Comp 1 ».
- Les produits non façonnés des exemples 1, 2 et 5 sont les exemples préférés.

Comme cela apparaît clairement à présent, l'invention fournit un produit non façonné permettant de fabriquer un mélange humide auto-coulable, qui ne conduit pas à une ségrégation, et qui présente après frittage une bonne résistance mécanique en compression à froid, même après frittage à 1350°C.

De plus, ce produit non façonné, après humidification, peut être pompé avec des pressions d'aspiration inférieures ou égales à 180 bar.

Enfin, d'autres essais ont montré qu'un produit non façonné selon l'invention, après frittage, ne génère que peu ou pas de défauts lorsqu'il est en contact avec du verre en fusion.

Un produit non façonné selon l'invention est donc parfaitement apte à être utilisé pour la réparation d'un four de fusion de verre, en particulier pour une réparation d'une sole d'un tel four.

Bien entendu la présente invention n'est pas limitée aux modes de réalisation décrits, fournis à titre d'exemples illustratifs et non limitatifs.

## Revendications

1. Produit non façonné comportant en pourcentages en masse, et pour un total de 100%,
A) particules (a) d'au moins un matériau réfractaire différent d'un verre et d'une vitrocéramique, et dont le ou les constituants principaux sont l'alumine (Al₂O₃) et/ou la zircone (ZrO₂) et/ou la silice (SiO₂) et/ou l'oxyde de chrome (Cr₂O₃) : complément à 100%,
B) 2% à 15% de particules (b) d'un liant à chaud choisies parmi des particules de vitrocéramique, des particules en un verre, en particulier en un verre précurseur de vitrocéramique, et les mélanges de ces particules,
un verre étant un matériau non cristallin présentant une température de transition vitreuse inférieure à 1100°C,
le liant à chaud présentant une température de fusion supérieure à 600°C, étant apte à lier ensemble, après durcissement sous l'effet d'une baisse de la température, des particules (a) auxquelles il a été mélangé, et n'étant pas à l'état solide à 1500°C,
C) moins de 2% de particules (c) de ciment hydraulique,
D) moins de 7% d'autres constituants,
l'ensemble desdites particules (a) et (b), étant distribuée, en pourcentages en masse par rapport à la masse du produit non façonné, de la manière suivante
| | |
|---|---|
| - fraction < 0,5 µm : | ≥ 1%, |
| - fraction < 2 µm : | ≥ 4%, |
| - fraction < 10 µm : | ≥ 13%, |
| - fraction < 40 µm : | 25% - 52% |

2. Produit non façonné selon la revendication précédente, la quantité massique de particules de vitrocéramique et/ou de particules de verre précurseur de vitrocéramique dans l'ensemble des particules (b) étant supérieure à 10%, sur la base de la masse de l'ensemble des particules (b).

3. Produit non façonné selon l'une quelconque des revendications précédentes, dans lequel la quantité massique de particules de vitrocéramique et/ou de particules de verre précurseur de vitrocéramique dans l'ensemble des particules (b) est supérieure à 95%, sur la base de la masse de l'ensemble des particules (b).

4. Produit non façonné selon l'une quelconque des revendications précédentes, dans lequel, la quantité de ciment hydraulique est inférieure ou égale à 1%.

5. Produit non façonné selon l'une quelconque des revendications précédentes, dans lequel les particules du produit non façonné se répartissent de la manière suivante, en pourcentages massiques :
| | |
|---|---|
| - fraction < 0,5 µm : | ≤ 7% et/ou |
| - fraction < 2 µm : | ≥ 5% et/ou |
| - fraction < 10 µm : | ≥ 16% et/ou |
| - fraction < 40 µm : | ≥ 27% et/ou |
| - fraction comprise entre 2 µm et 40 µm : | ≥ 16% et/ou ≤ 40%. |

6. Produit non façonné selon l'une quelconque des revendications précédentes, dans lequel les particules du produit non façonné se répartissent de la manière suivante, en pourcentages massiques :
| | |
|---|---|
| - fraction < 2 µm : | ≤ 18% et/ou |
| - fraction < 10 µm : | ≤ 40% et/ou |
| - fraction < 40 µm : | ≤ 50%. |

7. Produit non façonné selon l'une quelconque des revendications précédentes, dans lequel la taille maximale de l'ensemble des particules du produit non façonné est inférieure ou égale à 2,5 mm.

8. Produit non façonné selon l'une quelconque des revendications précédentes, dans lequel la quantité de particules (a) est supérieure à 82% et/ou inférieure à 98% de la masse du produit non façonné, et/ou, dans lequel la quantité de particules (b) est supérieure à 2% et inférieure à 13% de la masse du produit non façonné.

9. Produit non façonné selon l'une quelconque des revendications précédentes, dans lequel les particules (b) présentent une température de fusion supérieure à 750°C, de préférence supérieure à 800°C et inférieure à 1650°C, de préférence inférieure à 1550°C.

10. Produit non façonné selon l'une quelconque des revendications précédentes, dans lequel les particules (b) en un verre précurseur de vitrocéramique et/ou les particules (b) en vitrocéramique présentent la composition chimique suivante, en pourcentages massiques sur la base des oxydes et pour un total de plus de 95%, plus de 98, de préférence de sensiblement 100% :
- SiO₂ : 45-75%, et
- Al₂O₃ : 5-40%, et
- CaO + MgO + Li₂O : 3 - 30%,
- agents de nucléation, exprimés sous une forme oxyde : 0,1-20%.

11. Produit non façonné selon l'une quelconque des revendications précédentes, dans lequel les particules (b) se répartissent de la manière suivante, en pourcentage massique sur la base de particules (b) :
| | |
|---|---|
| - fraction < 1 mm : | ≥ 80%, de préférence ≥ 90% et/ou |
| - fraction < 0,5 mm : | ≥ 80%, de préférence ≥ 90% et/ou |
| - fraction < 0,1 mm : | ≥ 25% et/ou ≤ 48%, et/ou |
| - fraction < 0,04 mm : | ≤ 30%, de préférence ≤ 25%. |

12. Produit non façonné selon l'une quelconque des revendications précédentes, qui présente une composition chimique telle que la somme Al₂O₃ + ZrO₂ + SiO₂ + Cr₂O₃ ≥ 85%, de préférence ≥ 90%.

13. Produit non façonné selon l'une quelconque des revendications précédentes, qui présente une composition massique suivante, pour un total de plus de 95% :
| | |
|---|---|
| - Al₂O₃ : | 85% - 97% |
| - SiO₂ : | ≥ 1% et ≤ 11% ou, |
qui présente une composition massique telle que :
| | |
|---|---|
| - Al₂O₃ : | 43% - 60% |
| - ZrO₂ : | 20% - 43% |
| - SiO₂ : | 10% - 26% ou, |
qui présente une composition massique telle que :
| | |
|---|---|
| - Al₂O₃ : | 5% - 60%, |
| - ZrO₂ : | ≤ 35%, |
| - SiO₂ : | 5% - 25%, |
| - Cr₂O₃ : | 10% - 90%. |

14. Produit non façonné selon l'une quelconque des revendications précédentes, qui comporte un agent tensio-actif en une quantité comprise entre 0,075% et 1% de la masse dudit produit non façonné.

15. Produit non façonné selon l'une quelconque des revendications précédentes, dans lequel la fraction des particules de taille inférieure à 500 µm représente plus de 50% de la masse dudit produit non façonné.

16. Procédé de réparation d'une région d'un four de fusion de verre comportant les étapes suivantes :
1) indépendamment des étapes 2) à 4), préparation d'un produit non façonné selon l'une quelconque des revendications précédentes ;
2) vidange du verre en fusion contenu dans le four ;
3) optionnellement, rinçage de la sole, en particulier des zones usées, à l'aide d'un produit adapté pour porter à fusion les résidus de verre,
4) réduction de la température dans le four à une température supérieure à la température de transition vitreuse de la phase vitreuse du liant à chaud, de préférence entre 900°C et 1350°C ;
5) humidification dudit produit non façonné de manière à obtenir un mélange humide ;
6) mise en place dudit mélange humide ;
7) maintien de la température du four entre 1250°C et 1400°C afin de permettre le frittage dudit mélange humide, de préférence pendant un temps supérieur à 8 heures, de préférence supérieur à 10 heures, et de préférence inférieure à 15 heures ;
8) introduction d'une composition de verre à fondre et augmentation de la température du four jusqu'à sa température de fonctionnement.

17. Procédé selon la revendication immédiatement précédente, dans lequel, à l'étape 1), la composition chimique des particules (b) est choisie de manière à ce que la température de fusion desdites particules soit inférieure à la température des blocs de la région à réparer.

18. Procédé selon l'une quelconque des deux revendications immédiatement précédentes, dans lequel, à l'étape 6), ledit produit non façonné est coulé sur toute la surface de la sole du four.

19. Four de fusion de verre comportant au moins une partie, en particulier en contact avec du verre en fusion, notamment la sole, obtenue à partir d'un produit non façonné selon l'une quelconque des revendications 1 à 15 ou obtenue par un procédé selon l'une quelconque des trois revendications précédentes.

## Patentansprüche

1. Ungeformtes Produkt, das in Gewichtsprozent und bezogen auf insgesamt 100% Folgendes umfasst
A) Partikel (a) aus mindestens einem anderen feuerfesten Material als ein Glas und eine Glaskeramik, deren Hauptbestandteil bzw. Hauptbestandteile Aluminiumoxid (Al₂O₃) und/oder Zirkonoxid (ZrO₂) und/oder Siliziumdioxid (SiO₂) und/oder Chromoxid (Cr₂O₃) : Rest zu 100%, sind,
B) 2% bis 15% Partikel (b) aus einem Heißbindemittel, ausgewählt aus Glaskeramikpartikeln, Partikeln aus einem Glas, insbesondere aus einem Glaskeramikvorläuferglas, und den Gemischen dieser Partikel,
wobei ein Glas ein nicht-kristallines Material ist, das eine Glasübergangstemperatur von unter 1100°C aufweist,
wobei das Heißbindemittel eine Schmelztemperatur über 600°C aufweist und dafür geeignet ist, nach dem Aushärten unter der Einwirkung einer Temperaturabsenkung die Partikel (a), mit denen es gemischt worden ist, miteinander zu verbinden, und das bei 1500°C nicht im festen Zustand vorliegt,
C) weniger als 2% Partikel (c) aus hydraulischem Zement,
D) weniger als 7% andere Bestandteile,
wobei die Gesamtheit der Partikel (a) und (b) in Gewichtsprozenten, bezogen auf das Gewicht des ungeformten Produkts, folgendermaßen verteilt ist:
| | |
|---|---|
| - Fraktion < 0,5 µm: | ≥ 1%, |
| - Fraktion < 2 µm: | ≥ 4%, |
| - Fraktion < 10 µm: | ≥ 13%, |
| - Fraktion < 40 µm: | 25% - 52%. |

2. Ungeformtes Produkt nach dem vorhergehenden Anspruch, wobei die Gewichtsmenge an Glaskeramikpartikeln und/oder an Glaskeramikvorläuferglaspartikeln in der Gesamtheit der Partikel (b), bezogen auf das Gewicht der Gesamtheit der Partikel (b), mehr als 10% beträgt.

3. Ungeformtes Produkt nach einem der vorhergehenden Ansprüche, wobei die Gewichtsmenge an Glaskeramikpartikeln und/oder an Glaskeramikvorläuferglaspartikeln in der Gesamtheit der Partikel (b), bezogen auf das Gewicht der Gesamtheit der Partikel (b), mehr als 95% beträgt.

4. Ungeformtes Produkt nach einem der vorhergehenden Ansprüche, wobei die Menge an hydraulischem Zement weniger als oder gleich 1% beträgt.

5. Ungeformtes Produkt nach einem der vorhergehenden Ansprüche, wobei sich die Partikel des ungeformten Produkts in Gewichtsprozenten folgendermaßen verteilen:
| | |
|---|---|
| - Fraktion < 0,5 µm: | ≤ 7% und/oder |
| - Fraktion < 2 µm: | ≥ 5% und/oder |
| - Fraktion < 10 µm: | ≥ 16% und/oder |
| - Fraktion < 40 µm: | ≥ 27% und/oder |
| - Fraktion zwischen 2 µm und 40 µm: | ≥ 16% und/oder ≤ 40%. |

6. Ungeformtes Produkt nach einem der vorhergehenden Ansprüche, wobei sich die Partikel des ungeformten Produkts in Gewichtsprozenten folgendermaßen verteilen:
| | |
|---|---|
| - Fraktion < 2 µm: | ≤ 18% und/oder |
| - Fraktion < 10 µm: | ≤ 40% und/oder |
| - Fraktion < 40 µm: | ≤ 50%. |

7. Ungeformtes Produkt nach einem der vorhergehenden Ansprüche, wobei die maximale Größe der Gesamtheit der Partikel des ungeformten Produkts kleiner als oder gleich 2,5 mm ist.

8. Ungeformtes Produkt nach einem der vorhergehenden Ansprüche, wobei die Menge der Partikel (a) mehr als 82% und/oder weniger als 98%, bezogen auf das Gewicht des ungeformten Produkts, beträgt und/oder wobei die Menge der Partikel (b) mehr als 2% und weniger als 13%, bezogen auf das Gewicht des ungeformten Produkts, beträgt.

9. Ungeformtes Produkt nach einem der vorhergehenden Ansprüche, wobei die Partikel (b) eine Schmelztemperatur von über 750°C, vorzugsweise über 800°C, und unter 1650°C, vorzugsweise unter 1550°C, aufweisen.

10. Ungeformtes Produkt nach einem der vorhergehenden Ansprüche, wobei die Partikel (b) aus einem Glaskeramikvorläuferglas und/oder die Partikel (b) aus Glaskeramik die folgende chemische Zusammensetzung in Gewichtsprozenten, bezogen auf die Oxide und für insgesamt mehr als 95%, mehr als 98, vorzugsweise im Wesentlichen 100% aufweisen:
- SiO₂: 45-75% und
- Al₂O₃: 5-40% und
- CaO + MgO + Li₂O: 3-30%,
- Keimbildner, ausgedrückt in einer Oxidform: 0,1-20%.

11. Ungeformtes Produkt nach einem der vorhergehenden Ansprüche, wobei sich die Partikel (b) in Gewichtsprozenten, bezogen auf das Gewicht der Partikel (b), wie folgt verteilen:
| | |
|---|---|
| - Fraktion < 1 mm: | ≥ 80%, vorzugsweise ≥ 90% und/oder |
| - Fraktion < 0,5 mm: | ≥ 80%, vorzugsweise ≥ 90% und/oder |
| - Fraktion < 0,1 mm: | ≥ 25% und/oder ≤ 48% und/oder |
| - Fraktion < 0,04 mm: | ≤ 30%, vorzugsweise ≤ 25%. |

12. Ungeformtes Produkt nach einem der vorhergehenden Ansprüche, das eine chemische Zusammensetzung aufweist, derart, dass die Summe Al₂O₃ + ZrO₂ + SiO₂ + Cr₂O₃ ≥ 85%, vorzugsweise ≥ 90%.

13. Ungeformtes Produkt nach einem der vorhergehenden Ansprüche, das eine folgende Gewichtszusammensetzung für insgesamt mehr als 95% aufweist:
| | |
|---|---|
| - Al₂O₃: | 85% - 97% |
| - SiO₂: | ≥ 1% und ≤ 11% oder |
das eine Gewichtszusammensetzung aufweist, derart, dass:
| | |
|---|---|
| - Al₂O₃: | 43% - 60% |
| - ZrO₂: | 20% - 43% |
| - SiO₂: | 10% - 26%, oder |
das eine Gewichtszusammensetzung aufweist, derart, dass:
| | |
|---|---|
| - Al₂O₃: | 5% - 60%, |
| - ZrO₂: | ≤ 35%, |
| - SiO₂: | 5% - 25%, |
| - Cr₂O₃: | 10% - 90%. |

14. Ungeformtes Produkt nach einem der vorhergehenden Ansprüche, das ein oberflächenaktives Mittel in einer Menge zwischen 0,075% und 1%, bezogen auf das Gewicht des ungeformten Produkts, umfasst.

15. Ungeformtes Produkt nach einem der vorhergehenden Ansprüche, wobei die Fraktion der Partikel mit einer Größe unter 500 µm mehr als 50% des Gewichts des ungeformten Produkts ausmacht.

16. Verfahren zur Reparatur eines Bereichs eines Glasschmelzofens, das die folgenden Schritte umfasst:
1) unabhängig von den Schritten 2) bis 4) Herstellen eines ungeformten Produkts nach einem der vorhergehenden Ansprüche;
2) Entleerung des im Ofen befindlichen schmelzflüssigen Glases;
3) gegebenenfalls Spülen des Bodens, insbesondere der gebrauchten Zonen, mithilfe eines Produkts, das dafür geeignet ist, die Glasreste zu schmelzen;
4) Senken der Temperatur im Ofen auf eine Temperatur, die höher ist als die Glasübergangstemperatur der Glasphase des Heißbindemittels, vorzugsweise zwischen 900°C und 1350°C;
5) Befeuchten des ungeformten Produkts, um ein feuchtes Gemisch zu erhalten;
6) Einbringen des feuchten Gemischs;
7) Halten der Temperatur des Ofens zwischen 1250°C und 1400°C, um das Sintern des feuchten Gemischs zu ermöglichen, vorzugsweise während einer Dauer von mehr als 8 Stunden, vorzugsweise mehr als 10 Stunden, und vorzugsweise weniger als 15 Stunden;
8) Einbringen einer zu schmelzenden Glaszusammensetzung und Erhöhen der Temperatur des Ofens bis auf seine Betriebstemperatur.

17. Verfahren nach dem vorhergehenden Anspruch, wobei in Schritt 1) die chemische Zusammensetzung der Partikel (b) derart gewählt wird, dass die Schmelztemperatur der Partikel niedriger ist als die Temperatur der Blöcke des zu reparierenden Bereichs.

18. Verfahren nach einem der beiden vorhergehenden Ansprüche, wobei in Schritt 6) das ungeformte Produkt über die gesamte Oberfläche des Bodens des Ofens gegossen wird.

19. Glasschmelzofen, umfassend mindestens einen Abschnitt, der insbesondere mit schmelzflüssigem Glas in Kontakt kommt, insbesondere der Boden, der aus einem ungeformten Produkt nach einem der Ansprüche 1 bis 15 erhalten wird oder durch ein Verfahren nach einem der drei vorhergehenden Ansprüche erhalten wird.

## Claims

1. An unshaped product comprising, as percentages by weight and for a total of 100%,
A) particles (a) of at least one refractory material other than a glass and a glass-ceramic, and the main constituent(s) of which are alumina (Al₂O₃) and/or zirconia (ZrO₂) and/or silica (SiO₂) and/or chromium oxide (Cr₂O₃): remainder to 100%,
B) 2% to 15% of particles (b) of a hot binder chosen from glass-ceramic particles, particles made of a glass, in particular made of a glass-ceramic precursor glass, and the mixtures of these particles,
a glass being a noncrystalline material exhibiting a glass transition temperature of less than 1100°C,
the hot binder exhibiting a melting point of greater than 600°C, being capable of bonding together, after hardening under the effect of a fall in the temperature, particles (a) with which it has been mixed, and not being in the solid state at 1500°C,
C) less than 2% of particles (c) of hydraulic cement,
D) less than 7% of other constituents,
the combined said particles (a) and (b) being distributed, as percentages by weight with respect to the weight of the unshaped product, in the following way:
| | |
|---|---|
| - fraction < 0.5 µm : | ≥ 1%, |
| - fraction < 2 µm : | ≥ 4%, |
| - fraction < 10 µm : | ≥ 13%, |
| - fraction < 40 µm : | 25% - 52% |

2. The unshaped product as claimed in the preceding claim, the amount by weight of glass-ceramic particles and/or of particles of glass-ceramic precursor glass in the combined particles (b) being greater than 10%, on the basis of the weight of the combined particles (b).

3. The unshaped product as claimed in either one of the preceding claims, in which the amount by weight of glass-ceramic particles and/or of particles of glass-ceramic precursor glass in the combined particles (b) is greater than 95%, on the basis of the weight of the combined particles (b).

4. The unshaped product as claimed in any one of the preceding claims, in which the amount of hydraulic cement is less than or equal to 1%.

5. The unshaped product as claimed in any one of the preceding claims, in which the particles of the unshaped product are distributed in the following way, as percentages by weight:
| | |
|---|---|
| - fraction < 0.5 µm : | ≤ 7% and/or |
| - fraction < 2 µm : | ≥ 5% and/or |
| - fraction < 10 µm : | ≥ 16% and/or |
| - fraction < 40 µm : | ≥ 27% and/or |
| - fraction of between 2 µm and 40 µm: | ≥ 16% and/or ≤ 40%. |

6. The unshaped product as claimed in any one of the preceding claims, in which the particles of the unshaped product are distributed in the following way, as percentages by weight:
| | |
|---|---|
| - fraction < 2 µm: | ≤ 18% and/or |
| - fraction < 10 µm: | ≤ 40% and/or |
| - fraction < 40 µm: | ≤ 50%. |

7. The unshaped product as claimed in any one of the preceding claims, in which the maximum size of the combined particles of the unshaped product is less than or equal to 2.5 mm.

8. The unshaped product as claimed in any one of the preceding claims, in which the amount of particles (a) is greater than 82% and/or less than 98% of the weight of the unshaped product, and/or in which the amount of particles (b) is greater than 2% and less than 13% of the weight of the unshaped product.

9. The unshaped product as claimed in any one of the preceding claims, in which the particles (b) exhibit a melting point of greater than 750°C, preferably of greater than 800°C, and of less than 1650°C, preferably of less than 1550°C.

10. The unshaped product as claimed in any one of the preceding claims, in which the particles (b) made of a glass-ceramic precursor glass and/or the particles (b) made of glass-ceramic exhibit the following chemical composition, as percentages by weight on the basis of the oxides and for a total of more than 95%, more than 98%, preferably of substantially 100%:
- SiO₂: 45-75%, and
- Al₂O₃: 5-40%, and
- CaO + MgO + Li₂O: 3 - 30%,
- nucleating agents, expressed in an oxide form: 0.1-20%.

11. The unshaped product as claimed in any one of the preceding claims, in which the particles (b) are distributed in the following way, as percentages by weight on the basis of the particles (b):
| | |
|---|---|
| - fraction < 1 mm: | ≥ 80%, preferably ≥ 90%, and/or |
| - fraction < 0.5 mm: | ≥ 80%, preferably ≥ 90%, and/or |
| - fraction < 0.1 mm: | ≥ 25% and/or ≤ 48%, and/or |
| - fraction < 0.04 mm: | ≤ 30%, preferably ≤ 25%. |

12. The unshaped product as claimed in any one of the preceding claims, which exhibits a chemical composition such that the sum Al₂O₃ + ZrO₂ + SiO₂ + Cr₂O₃ ≥ 85%, preferably ≥ 90%.

13. The unshaped product as claimed in any one of the preceding claims, which exhibits a following composition by weight, for a total of more than 95%:
| | |
|---|---|
| - Al₂O₃: | 85% - 97%, |
| - SiO₂: | ≥ 1% and ≤ 11%, or |
which exhibits a composition by weight such that:
| | |
|---|---|
| - Al₂O₃: | 43% - 60%, |
| - ZrO₂: | 20% - 43%, |
| - SiO₂: | 10% - 26%, or |
which exhibits a composition by weight such that:
| | |
|---|---|
| - Al₂O₃: | 5% - 60%, |
| - ZrO₂: | ≤ 35%, |
| - SiO₂: | 5% - 25%, |
| - Cr₂O₃: | 10% - 90%. |

14. The unshaped product as claimed in any one of the preceding claims, which comprises a surface-active agent in an amount of between 0.075% and 1% of the weight of said unshaped product.

15. The unshaped product as claimed in any one of the preceding claims, in which the fraction of the particles with a size of less than 500 µm represents more than 50% of the weight of said unshaped product.

16. A process for repairing a region of a glass melting furnace, comprising the following stages:
1) independently of stages 2) to 4), preparing an unshaped product as claimed in any one of the preceding claims;
2) emptying of the molten glass present in the furnace;
3) optionally, rinsing of the bottom, in particular of the worn zones, using a product suitable for melting the glass residues;
4) reducing the temperature in the furnace to a temperature greater than the glass transition temperature of the glassy phase of the hot binder, preferably between 900°C and 1350°C;
5) wetting of said unshaped product so as to obtain a wet mixture;
6) installing said wet mixture;
7) maintaining the temperature of the furnace between 1250°C and 1400°C in order to make possible the sintering of said wet mixture, preferably for a time of greater than 8 hours, preferably of greater than 10 hours, and preferably of less than 15 hours;
8) introducing a glass composition to be melted and increasing the temperature of the furnace up to its operating temperature.

17. The process as claimed in the immediately preceding claim, in which, in stage 1), the chemical composition of the particles (b) is chosen so that the melting point of said particles is lower than the temperature of the blocks of the region to be repaired.

18. The process as claimed in any one of the two immediately preceding claims, in which, in stage 6), said unshaped product is poured over the entire surface of the bottom of the furnace.

19. A glass melting furnace comprising at least one part, especially in contact with molten glass, in particular the bottom, obtained from an unshaped product as claimed in any one of claims 1 to 15 or obtained by a process as claimed in any one of the three preceding claims.
